# EUROPEAN PATENT APPLICATION

(11) **EP 4 772 968 A1**
(43) Date of publication of application: **08.07.2026**
(21) Application number: 24865684.5
(22) Date of filing: 02.08.2024
(51) Int. Cl.: G06F 3/01, G06F 3/04842, G06F 1/16, G06F 3/00

(54) **ELECTRONIC DEVICE, METHOD, AND COMPUTER-READABLE MEDIUM FOR DISPLAYING VIRTUAL OBJECT**

(30) Priority: 11.09.2023 KR 20230120758; 04.10.2023 KR 20230132101
(71) Applicant: Samsung Electronics Co., Ltd., Suwon-si, Gyeonggi-do 16677 (KR)
(72) Inventor: JUNG, Soojin, Suwon-si Gyeonggi-do 16677 (KR); YOO, Sanga, Suwon-si Gyeonggi-do 16677 (KR)
(74) Representative: HGF
(86) International application number: PCT/KR2024/011452
(87) International publication number: WO 2025/058241

(57) **Abstract**

The wearable device may include: a camera; at least one sensor; a display; a memory for storing instructions; and a processor, wherein the instructions, when executed by the processor, cause the wearable device to: obtain information on a boundary area for guiding a boundary within which a virtual environment is provided; obtain a position of the wearable device with respect to the boundary area on the basis of sensor data obtained from the camera and the at least one sensor; on the basis of identifying that the position of the wearable device in the boundary area is within a first threshold distance from the boundary area, display a pattern image for indicating the boundary area through the display while displaying the virtual environment through the display; and on the basis of identifying that the position of an input means for the wearable device is within a second threshold distance from the boundary area, display, through the display, at least a part of an external image obtained through the camera in a virtual area according to the position of the input means while displaying the virtual environment and the pattern image through the display.

## Description

### [Technical Field]

The present disclosure relates to an electronic device, a method, and a computer-readable medium for displaying a virtual area.

### [Background Art]

In order to provide enhanced user experience, an electronic device that provides an augmented reality (AR) service that displays information generated by a computer in connection with an external object in the real-world is being developed. The electronic device may provide the augmented reality service to a user using a virtual object corresponding to the user.

The above-described information may be provided as a related art for the purpose of helping understanding of the present disclosure. No claim or determination is raised as to whether any of the above-described descriptions may be applied as a prior art related to the present disclosure.

### [Disclosure]

### [Technical Solution]

In embodiments, a wearable device is provided. The wearable device may include a camera, at least one sensor, a display, memory for storing instructions, and a processor. The instructions may cause, when executed by the processor, the wearable device to obtain information for a boundary region to guide a boundary in which a virtual environment is provided, obtain a position of the wearable device with respect to the boundary region based on sensor data obtained from the camera or the at least one sensor, based on identifying that the position of the wearable device within the boundary region is within a first threshold distance from the boundary region, display a pattern image to represent the boundary region through the display while displaying the virtual environment through the display, and based on identifying that a position of an input means for the wearable device is within a second threshold distance from the boundary region, display at least a portion of an external image obtained through the camera through the display in a virtual area according to the position of the input means while displaying the virtual environment and the pattern image through the display.

In embodiments, a wearable device is provided. The wearable device may include a camera, at least one sensor, a display, memory for storing instructions, and a processor. The instructions may cause, when executed by the processor, the wearable device to, based on scanning of a physical space, obtain information for a boundary region to provide a virtual environment, obtain a position of the wearable device with respect to the boundary region based on sensor data obtained from the camera or the at least one sensor, based on identifying that the position of the wearable device is outside the boundary region, display an external image obtained through the camera through the display, based on identifying that the position of the wearable device outside the boundary region is within a first threshold distance from the boundary region, display a pattern image to represent the boundary region through the display while displaying the external image obtained through the camera, and based on identifying that the position of the wearable device or a position of an input means for the wearable device is within a second threshold distance from the boundary region, display a virtual image of the virtual environment through the display in a boundary virtual area according to the position of the wearable device or the position of the input means while displaying the external image and the pattern image through the display.

### [Description of the Drawings]

FIG. 1 illustrates an example of a boundary region for providing a virtual environment.
FIG. 2A illustrates an example of a perspective view of a wearable device.
FIG. 2B illustrates an example of one or more hardware disposed in a wearable device.
FIGS. 3A to 3B illustrate an example of an exterior of a wearable device.
FIG. 4 illustrates an example of a block diagram of a wearable device.
FIGS. 5A to 5C illustrate examples of an interaction between a boundary region and a user within the boundary region.
FIG. 6 illustrates an example of a virtual area and a sound control for an external image.
FIG. 7 illustrates an example of displaying a pattern image according to a status of a user.
FIG. 8 illustrates an example of a notification message for notifying a status of a user.
FIGS. 9A to 9E illustrate an example of a visual object for an area adjustment of a virtual area.
FIGS. 10A to 10B illustrate examples of an interaction between a boundary region and a user using a plurality of virtual areas.
FIG. 11A illustrates an operation flow of a wearable device for an interaction with a boundary region within the boundary region.
FIG. 11B illustrates an operation flow of a wearable device for an area adjustment of a virtual area within the boundary region.
FIGS. 12A to 12B illustrate examples of an interaction between a boundary region and a user outside the boundary region.
FIG. 13 illustrates an example of displaying a boundary region according to an application outside the boundary region.
FIG. 14A illustrates an operation flow of a wearable device for an interaction with a boundary region outside the boundary region.
FIG. 14B illustrates an operation flow of a wearable device for an area adjustment of a virtual area outside the boundary region.
FIG. 15 illustrates an example of a virtual area for an external object entering a boundary region.
FIG. 16 illustrates an example of a notification of an external object entering a boundary region.
FIG. 17 illustrates an operation flow of a wearable device for notifying an external object entering a boundary region.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a space (e.g., a plane, an object, a shape, a surface, a figure, a 3D figure, an area, an occupied area, a position, a depth, or a distance), a term referring to a distance (e.g., a position, a distance, a depth, distance information, a distance value, a depth value, position information, position data, or depth data), a term referring to a pass-through surface (e.g., a pass-through area, a virtual surface, a pass-through surface, a field of view surface, a virtual area, a field of view area, a transition surface, a transition space, a transition area, a pass surface, or a pass area), a term referring to a value (e.g., a threshold value, a reference value, a reference area, a reference range, a level, a threshold, a range, a value, or an area), a term for a computation state (e.g., a step, an operation, or a procedure), a term referring to network entities, a term referring to a component of a device, and the like, used in the following description, are exemplified for convenience of description. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

A processor 120 of the present disclosure may include various processing circuitry and/or a plurality of processors. For example, a term "processor" used in the present document, including claims, may include various processing circuitry including at least one processor, and one or more of the at least one processor may be configured to perform various function(s) described individually and/or collectively in the present disclosure. As used in the present disclosure, in a case that "processor", "at least one processor", and "one or more processors" are described as being configured to perform various functions, these terms are not limited to an example, and may include situations in which one processor performs a part of the cited functions and other processor(s) perform another function of the cited functions, situations in which a single processor may perform all of the cited functions, and/or a combination of processors performed in a distributed method. In addition, instructions (or a program command) for various function(s) in the present disclosure may cause an electronic device (e.g., a wearable device 101) to execute the various function(s) when executed by a processor.

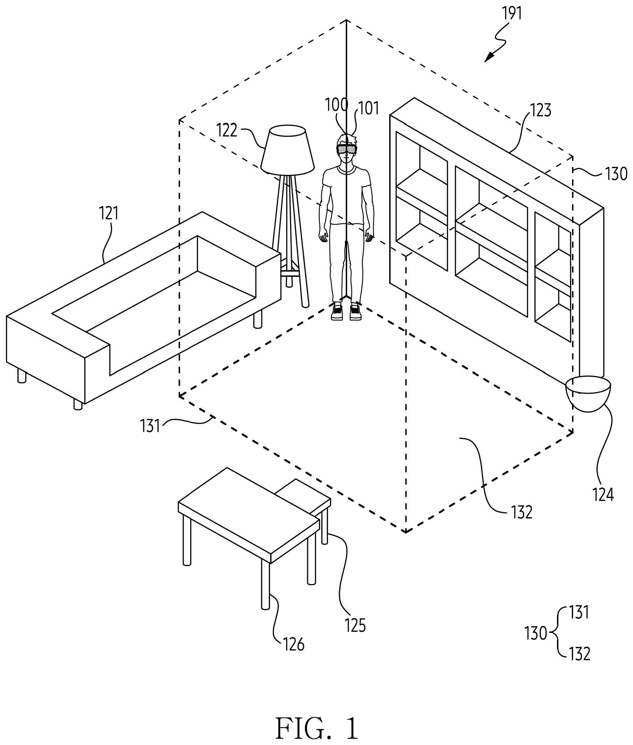

FIG. 1 illustrates an example of a boundary region for providing a virtual environment.

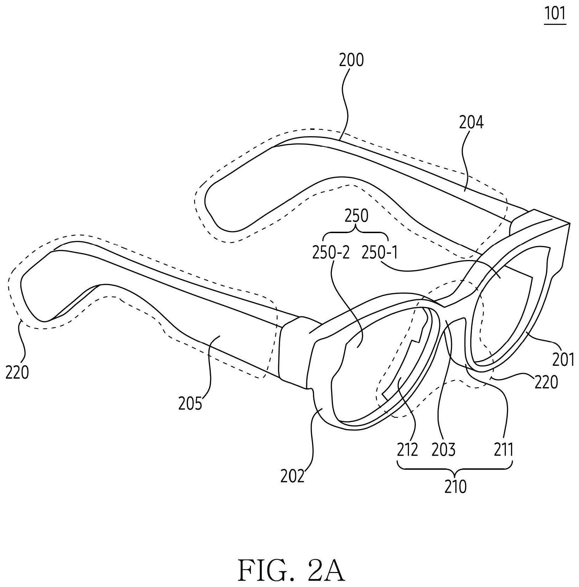

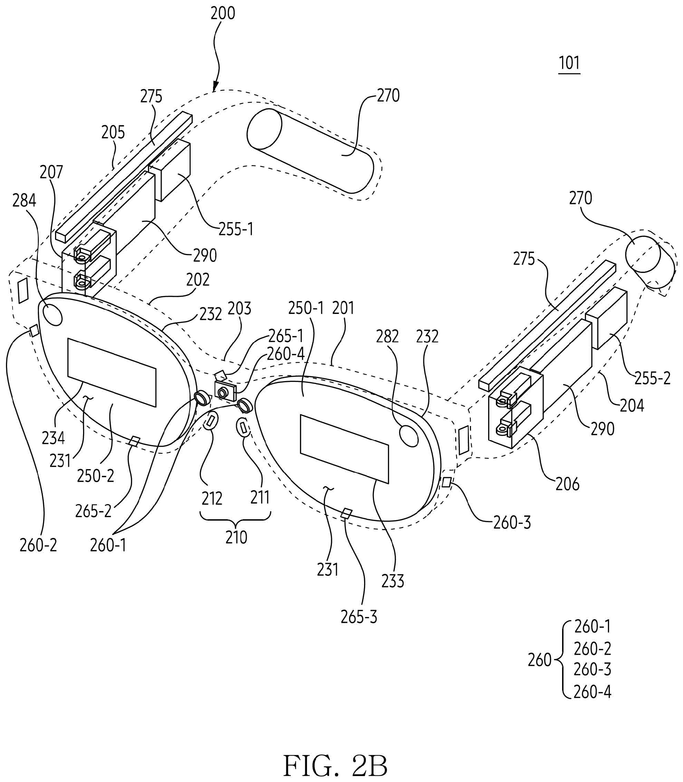

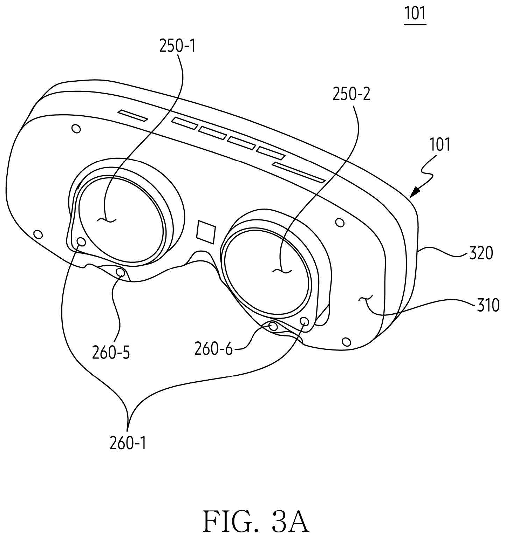

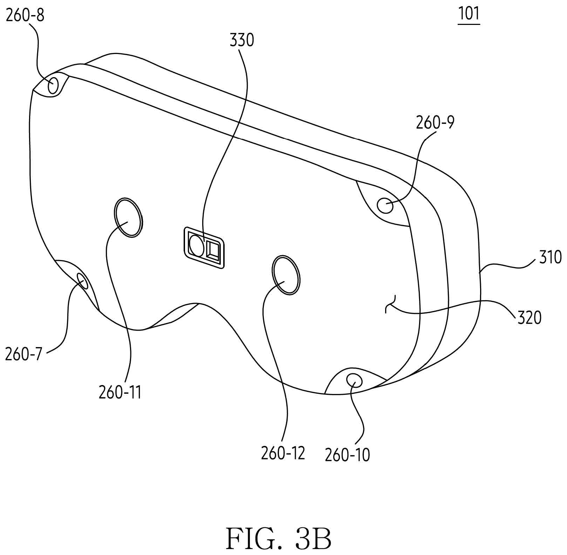

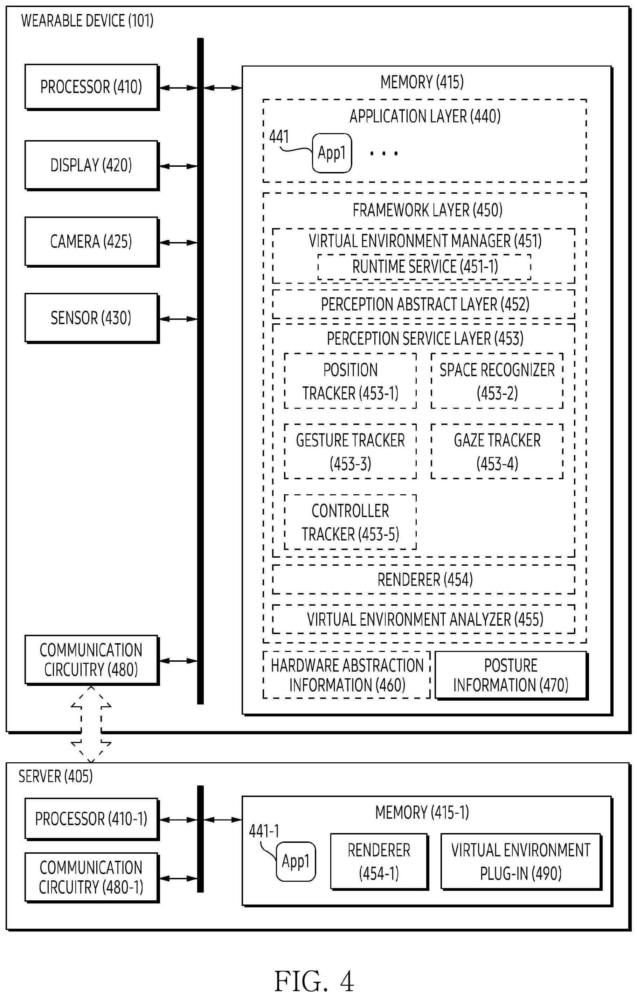

Referring to FIG. 1, a wearable device 101 may include a head-mounted display (HMD) wearable on a head of a user 110. The wearable device 101 may be referred to as a head-mount device (HMD), a headgear electronic device, a glasses-type electronic device, a video see-through (or visible see-through) (VST) device, an extended reality (XR) device, a virtual reality (VR) device, and/or an augmented reality (AR) device. Although an external appearance of the wearable device 101 having a form of glasses is illustrated, an embodiment is not limited thereto. An example of a hardware configuration included in the wearable device 101 will be exemplarily described with reference to FIG. 4. An example of a structure of the wearable device 101 wearable on the head of the user 110 will be described with reference to FIGS. 2A, 2B, 3A and/or 3B. The wearable device 101 may be referred to as an electronic device. For example, the electronic device may form the HMD by being coupled to an accessory (e.g., a strap) to be attached to a head of a user.

The wearable device 101 according to an embodiment may execute a function associated with augmented reality (AR) and/or mixed reality (MR). For example, in a state that the user 110 wears the wearable device 101, the wearable device 101 may include at least one lens disposed adjacent to an eye of the user 110. The wearable device 101 may couple ambient light passing through the lens with light emitted from a display of the wearable device 101. A displaying area of the display may be formed in a lens through which ambient light passes. Since the wearable device 101 couples the ambient light and the light emitted from the display, the user 110 may view an image in which a real object recognized by the ambient light and a virtual object formed by the light emitted from the display are mixed. The above-described augmented reality, mixed reality, and/or virtual reality may be referred to as extended reality (XR).

The wearable device 101 according to an embodiment may execute a function associated with video see-through (or visible see-through) (VST) and/or virtual reality (VR). For example, in the state that the user 110 wears the wearable device 101, the wearable device 101 may include a housing covering the eye of the user 110. The wearable device 101 may include a display disposed on a first surface of the housing facing the eye in the state. The wearable device 101 may include a camera disposed on a second surface opposite to the first surface. Using the camera, the wearable device 101 may obtain an image and/or a video representing ambient light. The wearable device 101 may enable the user 110 to recognize the ambient light through the display by outputting the image and/or the video in the display disposed on the first surface. A displaying area (or a displaying region) (or an active area (or an active region)) of the display disposed on the first surface may be formed by one or more pixels included in the display. The wearable device 101 may enable the user 110 to recognize a virtual object together with a real object recognized by ambient light by synthesizing the virtual object with the image and/or the video outputted through the display.

The wearable device 101 according to an embodiment may identify or recognize a position (or a location) and/or a direction (or orientation) of the wearable device 101 based on an image (and/or a video) obtained (or acquired) using a camera. Referring to FIG. 1, in an exemplary state 191 included in an external space (e.g., a room) including external objects 121, 122, 123, 124, 125, and 126, the wearable device 101 may obtain information on the external space using one or more cameras and/or one or more sensors. The information may include a geographic location (e.g., a global positioning system (GPS) coordinate) of the external space identified from the one or more sensors. The information may include an image and/or a video of the external space identified from the one or more cameras. The wearable device 101 may identify the external objects 121, 122, 123, 124, 125, and 126 included in the external space from the image and/or the video by performing object recognition on the image and/or the video.

The wearable device 101 may provide a user experience based on virtual reality and/or augmented reality while being worn by the user 110. For example, the wearable device 101 may display a virtual object (or an imaginary object) covering at least a portion of a field of view (FoV) of the user 110. In a case that a real object is occluded by the virtual object within the field of view, the user 110 who fails to recognize the real object may collide with the real object. The wearable device 101 may define a boundary region 130 such that the user 110 does not collide with distribution (or a positional relationship) of the real object (e.g., the external objects 121, 122, 123, 124, 125, and 126).

The wearable device 101 may set the boundary region 130. The boundary region 130 represents a range of physical positions of the wearable device 101 and/or an input means (e.g., a controller connected to the wearable device 101, and at least a part of a body of the user 110 (e.g., a hand)) for the wearable device 101, in which the wearable device 101 is set to display a virtual environment. The boundary region 130 may be used to guide a boundary in which a virtual environment is provided to the user 110. In terms of providing virtual reality and/or augmented reality without collision, the boundary region 130 may be referred to as a Guardian area, a Guardian region, a protected region, a protected area, a protected boundary area, a protected boundary region, a safety area, a safety region (or a safety zone), and the Guardian region, in addition to a boundary region.

According to an embodiment, the wearable device 101 may set the boundary region 130 according to a user input of the user 110. The boundary region 130 may include a boundary line 131 representing a boundary on a floor surface and a boundary surface 132 formed above the boundary line 131. For example, the wearable device 101 may set a closed curve area set through the controller connected to the wearable device 101 as the boundary line 131 of the boundary region 130. For example, the wearable device 101 may set a closed shape (e.g., a circle) of a specified size as the boundary line 131 of the boundary region 130 in response to a user input. According to another embodiment, the wearable device 101 may set the boundary region 130 using at least one sensor and/or camera. For example, the wearable device 101 may set the boundary region 130 through scanning of a physical space using the at least one sensor and/or camera. The wearable device 101 may obtain information on distribution (or a positional relationship) of a real object (e.g., the external objects 121, 122, 123, 124, 125, and 126) positioned in a plurality of areas in a specified area. The wearable device 101 may set the boundary region 130 based on the information on the real object.

Hereinafter, an example of a hardware configuration of the wearable device 101 will be described with reference to FIGS. 2A, 2B, 3A, 3B, and 4.

According to an embodiment, a wearable device 101 may have a form of glasses that is wearable on a body part (e.g., head) of a user. The wearable device 101 of FIGS. 2A to 2B may be an example of the wearable device 101 of FIG. 1. The wearable device 101 may include a head-mounted display (HMD). For example, a housing of the wearable device 101 may include a flexible material such as rubber and/or silicone having a form closely attached to a portion of the user's head (for example, a portion of a face surrounding two eyes). For example, the housing of the wearable device 101 may include one or more straps able to be twined around the user's head, and/or one or more temples attachable to ears of the head.

Referring to FIG. 2A, according to an embodiment, the wearable device 101 may include at least one display 250 and a frame 200 supporting the at least one display 250.

According to an embodiment, the wearable device 101 may be wearable on a portion of the user's body. The wearable device 101 may provide augmented reality (AR), virtual reality (VR), or mixed reality (MR) combining the augmented reality and the virtual reality to a user wearing the wearable device 101. For example, the wearable device 101 may display a virtual reality image provided from at least one optical device 282 and 284 of FIG. 2B on at least one display 250, in response to a user's preset gesture obtained through a motion recognition camera 260-2 and 260-3 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide visual information transmitted through a lens included in the at least one display 250 from ambient light to a user and other visual information distinguished from the visual information2. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 101, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through ambient light, on a display area formed on the second surface 232.

According to an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 101 to guide a screen displayed by the at least one display 250 to the user's eyes. For example, the screen may be transmitted to the user's eyes based on total internal reflection (TIR) generated in the at least one waveguide 233 and 234.

The wearable device 101 may analyze an object included in a real image collected through a photographing camera 260-4, combine with a virtual object corresponding to an object that becomes a subject of augmented reality provision among the analyzed object, and display on the at least one display 250. The virtual object may include at least one of text and images for various information associated with the object included in the real image. The wearable device 101 may analyze the object based on a multi-camera such as a stereo camera. For the object analysis, the wearable device 101 may execute space recognition (e.g., simultaneous localization and mapping (SLAM)) using the multi-camera and/or time-of-flight (ToF). The user wearing the wearable device 101 may watch an image displayed on the at least one display 250.

According to an embodiment, a frame 200 may be configured with a physical structure in which the wearable device 101 may be worn on the user's body. According to an embodiment, the frame 200 may be configured so that when the user wears the wearable device 101, the first display 250-1 and the second display 250-2 may be positioned corresponding to the user's left and right eyes. The frame 200 may support the at least one display 250. For example, the frame 200 may support the first display 250-1 and the second display 250-2 to be positioned at positions corresponding to the user's left and right eyes.

Referring to FIG. 2A, according to an embodiment, the frame 200 may include an area 220 at least partially in contact with the portion of the user's body in case that the user wears the wearable device 101. For example, the area 220 of the frame 200 in contact with the portion of the user's body may include an area in contact with a portion of the user's nose, a portion of the user's ear, and a portion of the side of the user's face that the wearable device 101 contacts. According to an embodiment, the frame 200 may include a nose pad 210 that is contacted on the portion of the user's body. When the wearable device 101 is worn by the user, the nose pad 210 may be contacted on the portion of the user's nose. The frame 200 may include a first temple 204 and a second temple 205, which are contacted on another portion of the user's body that is distinct from the portion of the user's body.

For example, the frame 200 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 101 may identify an external object (e.g., a user's fingertip) touching the frame 200 and/or a gesture performed by the external object by using a touch sensor, a grip sensor, and/or a proximity sensor formed on at least a portion of the surface of the frame 200.

According to an embodiment, the wearable device 101 may include hardware (e.g., hardware to be described later based on the block diagram of FIG. 4) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 200.

According to an embodiment, the microphone (e.g., the microphones 265-1, 265-2, and 265-3) of the wearable device 101 may obtain a sound signal, by being disposed on at least a portion of the frame 200. The first microphone 265-1 disposed on the bridge 203, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 101 is two or more, the wearable device 101 may identify a direction of the sound signal by using a plurality of microphones disposed on different portions of the frame 200.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 101 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 260-4, an eye tracking camera (ET CAM) 260-1, and/or the motion recognition camera 260-2 and 206-3. The photographing camera 260-4, the eye tracking camera 260-1, and the motion recognition camera 260-2 and 260-3 may be disposed at different positions on the frame 200 and may perform different functions. The eye tracking camera 260-1 may output data indicating a position of eye or a gaze of the user wearing the wearable device 101. For example, the wearable device 101 may detect the gaze from an image including the user's pupil obtained through the eye tracking camera 260-1. The wearable device 101 may identify an object (e.g., a real object, and/or a virtual object) focused by the user, by using the user's gaze obtained through the eye tracking camera 260-1. The wearable device 101 identifying the focused object may execute a function (e.g., gaze interaction) for interaction between the user and the focused object. The wearable device 101 may represent a portion corresponding to eye of an avatar indicating the user in the virtual space, by using the user's gaze obtained through the eye tracking camera 260-1. The wearable device 101 may render an image (or a screen) displayed on the at least one display 250, based on the position of the user's eye. For example, visual quality (e.g., resolution, brightness, saturation, grayscale, and PPI) of a first area related to the gaze within the image and visual quality of a second area distinguished from the first area may be different. The wearable device 101 may obtain an image having the visual quality of the first area matching the user's gaze and the visual quality of the second area by using foveated rendering. For example, when the wearable device 101 supports an iris recognition function, user authentication may be performed based on iris information obtained using the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 260-4 may photograph a real image or background to be matched with a virtual image in order to implement the augmented reality or mixed reality content. The photographing camera 260-4 may be used to obtain an image having a high resolution based on a high resolution (HR) or a photo video (PV). The photographing camera 260-4 may photograph an image of a specific object existing at a position viewed by the user and may provide the image to the at least one display 250. The at least one display 250 may display one image in which a virtual image provided through the at least one optical device 282 and 284 is overlapped with information on the real image or background including an image of the specific object obtained by using the photographing camera 260-4. The wearable device 101 may compensate for depth information (e.g., a distance between the wearable device 101 and an external object obtained through a depth sensor), by using an image obtained through the photographing camera 260-4. The wearable device 101 may perform object recognition through an image obtained using the photographing camera 260-4. The wearable device 101 may perform a function (e.g., auto focus) of focusing an object (or subject) within an image and/or an optical image stabilization (OIS) function (e.g., an anti-shaking function) by using the photographing camera 260-4. While displaying a screen representing a virtual space on the at least one display 250, the wearable device 101 may perform a pass through function for displaying an image obtained through the photographing camera 260-4 overlapping at least a portion of the screen. In an embodiment, the photographing camera 260-4 may be disposed on the bridge 203 disposed between the first rim 201 and the second rim 202.

The eye tracking camera 260-1 may implement a more realistic augmented reality by matching the user's gaze with the visual information provided on the at least one display 250, by tracking the gaze of the user wearing the wearable device 101. For example, when the user looks at the front, the wearable device 101 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 101 is positioned.

The motion recognition camera 260-2 and 260-3 may provide a specific event to the screen provided on the at least one display 250 by recognizing the movement of the whole or portion of the user's body, such as the user's torso, hand, or face. The motion recognition camera 260-2 and 260-3 may obtain a signal corresponding to motion by recognizing the user's motion (e.g., gesture recognition), and may provide a display corresponding to the signal to the at least one display 250. The processor may identify a signal corresponding to the operation and may perform a preset function based on the identification. The motion recognition camera 260-2 and 260-3 may be used to perform simultaneous localization and mapping (SLAM) for 6 degrees of freedom pose (6 dof pose) and/or a space recognition function using a depth map. The processor may perform a gesture recognition function and/or an object tracking function, by using the motion recognition camera 260-2 and 260-3. In an embodiment, the motion recognition camera 260-2 and camera 260-3 may be disposed on the first rim 201 and/or the second rim 202.

The camera 260 included in the wearable device 101 are not limited to the above-described eye tracking camera 260-1 and the motion recognition camera 260-2 and 260-3. For example, the wearable device 101 may identify an external object included in the FoV by using a camera disposed toward the user's FoV. The wearable device 101 identifying the external object may be performed based on a sensor for identifying a distance between the wearable device 101 and the external object, such as a depth sensor and/or a time of flight (ToF) sensor. The camera 260 disposed toward the FoV may support an autofocus function and/or an optical image stabilization (OIS) function. For example, in order to obtain an image including a face of the user wearing the wearable device 101, the wearable device 101 may include the camera 260 (e.g., a face tracking (FT) camera) disposed toward the face.

Although not illustrated, the wearable device 101 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 200, and the hinge units 206 and 207.

According to an embodiment, the battery module 270 may supply power to electronic components of the wearable device 101. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

The antenna module 275 may transmit the signal or power to the outside of the wearable device 101 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

The speaker 255 may output a sound signal to the outside of the wearable device 101. A sound output module may be referred to as a speaker. In an embodiment, the speaker 255 may be disposed in the first temple 204 and/or the second temple 205 in order to be disposed adjacent to the ear of the user wearing the wearable device 101. For example, the speaker 255 may include a second speaker 255-2 disposed adjacent to the user's left ear by being disposed in the first temple 204, and a first speaker 255-1 disposed adjacent to the user's right ear by being disposed in the second temple 205.

The light emitting module (not illustrated) may include at least one light emitting element. The light emitting module may emit light of a color corresponding to a specific state or may emit light through an operation corresponding to the specific state in order to visually provide information on a specific state of the wearable device 101 to the user. For example, when the wearable device 101 requires charging, it may emit red light at a constant cycle. In an embodiment, the light emitting module may be disposed on the first rim 201 and/or the second rim 202.

Referring to FIG. 2B, according to an embodiment, the wearable device 101 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by different blocks of FIG. 4A) included in the wearable device 101 may be disposed. The wearable device 101 may include a flexible PCB (FPCB) for interconnecting the hardware.

According to an embodiment, the wearable device 101 may include at least one of a gyro sensor, a gravity sensor, and/or an acceleration sensor for detecting the posture of the wearable device 101 and/or the posture of a body part (e.g., a head) of the user wearing the wearable device 101. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 101 may identify the user's motion and/or gesture performed to execute or stop a specific function of the wearable device 101 based on the IMU.

FIGS. 3A to 3B illustrate an example of an exterior of a wearable device (e.g., the wearable device 101). The wearable device 101 of FIGS. 3A to 3B may be an example of the wearable device 101 of FIG. 1. According to an embodiment, an example of an exterior of a first surface 310 of a housing of the wearable device 101 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 101 may have an attachable shape on the user's body part (e.g., the user's face). Although not illustrated, the wearable device 101 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 101 may further include rubber or silicon packing, which are formed on the first surface 310, for preventing interference by light (e.g., ambient light) different from the light emitted from the first display 250-1 and the second display 250-2.

According to an embodiment, the wearable device 101 may include cameras 260-1 for photographing and/or tracking two eyes of the user adjacent to each of the first display 250-1 and the second display 250-2. The cameras 260-1 may be referred to as the gaze tracking camera 260-1 of FIG. 2B. According to an embodiment, the wearable device 101 may include cameras 260-5 and 260-6 for photographing and/or recognizing the user's face. The cameras 260-5 and 260-6 may be referred to as a FT camera. The wearable device 101 may control an avatar representing a user in a virtual space, based on a motion of the user's face identified using the cameras 260-5 and 260-6. For example, the wearable device 101 may change a texture and/or a shape of a portion (e.g., a portion of an avatar representing a human face) of the avatar, by using information obtained by the cameras 260-5 and 260-6 (e.g., the FT camera) and representing the facial expression of the user wearing the wearable device 101.

Referring to FIG. 3B, a camera (e.g., cameras 260-7, 260-8, 260-9, 260-10, 260-11, and 260-12), and/or a sensor (e.g., the depth sensor 330) for obtaining information associated with the external environment of the wearable device 101 may be disposed on the second surface 320 opposite to the first surface 310 of FIG. 3A. For example, the cameras 260-7, 260-8, 260-9, and 260-10 may be disposed on the second surface 320 in order to recognize an external object. The cameras 260-7, 260-8, 260-9, and 260-10 may be referred to as the motion recognition cameras 260-2 and 260-3 of FIG. 2B.

For example, by using cameras 260-11 and 260-12, the wearable device 101 may obtain an image and/or video to be transmitted to each of the user's two eyes. The camera 260-11 may be disposed on the second surface 320 of the wearable device 101 to obtain an image to be displayed through the second display 250-2 corresponding to the right eye among the two eyes. The camera 260-12 may be disposed on the second surface 320 of the wearable device 101 to obtain an image to be displayed through the first display 250-1 corresponding to the left eye among the two eyes. The cameras 260-11 and 260-12 may be referred to as the photographing camera 260-4 of FIG. 2B.

According to an embodiment, the wearable device 101 may include the depth sensor 330 disposed on the second surface 320 in order to identify a distance between the wearable device 101 and the external object. By using the depth sensor 330, the wearable device 101 may obtain spatial information (e.g., a depth map) about at least a portion of the FoV of the user wearing the wearable device 101. Although not illustrated, a microphone for obtaining sound outputted from the external object may be disposed on the second surface 320 of the wearable device 101. The number of microphones may be one or more according to embodiments.

Hereinafter, a hardware or software configuration of the wearable device 101 will be described below with reference to FIG. 4.

FIG. 4 illustrates an example of a block diagram of a wearable device (e.g., the wearable device 101). The wearable device 101 of FIG. 4 may be an example of the wearable device 101 of FIG. 1 and the wearable device 101 of FIGS. 2A to 3B.

Referring to FIG. 4, the wearable device 101 according to an embodiment may include at least one of a processor 410, memory 415, a display 420, a camera 425, a sensor 430, or communication circuitry 480. The processor 410, the memory 415, the display 420, the camera 425, the sensor 430, and the communication circuitry 480 may be electronically and/or operably coupled with each other by an electronical component such as a communication bus 402. A type and/or the number of hardware components included in the wearable device 101 is not limited to as illustrated in FIG. 4. For example, the wearable device 101 may include only some of the hardware components illustrated in FIG. 4. Elements (e.g., layers and/or modules) in memory described below may be in a state of being logically divided. However, it is not limited thereto.

The processor 410 of the wearable device 101 according to an embodiment may include a hardware component for processing data based on one or more instructions. The hardware component for processing data may include, for example, an arithmetic and logic unit (ALU), a field programmable gate array (FPGA), and/or a central processing unit (CPU). The number of the processor 410 may be one or more. For example, the processor 410 may have a structure of a multi-core processor such as a dual core, a quad core, or a hexa core.

The memory 415 of the wearable device 101 according to an embodiment may include a hardware component for storing data and/or instructions inputted to and/or outputted from the processor 410. The memory 415 may include, for example, a volatile memory such as a random-access memory (RAM) and/or a non-volatile memory such as a read-only memory (ROM). The volatile memory may include, for example, at least one of a dynamic RAM (DRAM), a static RAM (SRAM), a Cache RAM, and a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, and an embedded multi-media card (eMMC).

In an embodiment, the display 420 of the wearable device 101 may output visualized information to a user of the wearable device 101. For example, the display 420 may output visualized information to the user by being controlled by the processor 410 including circuitry such as a graphic processing unit (GPU). The display 420 may include a flat panel display (FPD) and/or electronic paper. The FPD may include a liquid crystal display (LCD), a plasma display panel (PDP), and/or one or more light emitting diodes (LEDs). The LED may include an organic LED (OLED).

In an embodiment, the camera 425 of the wearable device 101 may include one or more optical sensors (e.g., a charged coupled device (CCD) sensor and a complementary metal oxide semiconductor (CMOS) sensor) that generate an electrical signal representing a color and/or brightness of light. A plurality of optical sensors included in the camera 425 may be disposed in a form of a 2-dimensional array. The camera 425 may generate 2D frame data corresponding to light reaching the optical sensors of the 2D array by obtaining electrical signals of each of the plurality of optical sensors substantially simultaneously. For example, photo data captured using the camera 425 may mean a 2D frame data obtained from the camera 425. For example, video data captured using the camera 425 may mean a sequence of a plurality of 2D frame data obtained from the camera 425 according to a frame rate. The camera 425 may further include a flash light that is disposed toward a direction in which the camera 425 receives light and configured to output light toward the direction.

According to an embodiment, the wearable device 101 may include a plurality of cameras (not illustrated) disposed toward different directions as an example of the camera 425. Among the plurality of cameras, a first camera may be referred to as a motion recognition camera, and a second camera may be referred to as an eye tracking camera. The wearable device 101 may identify a position, a shape, and/or a gesture of a hand by using an image (e.g., the image 110 of FIG. 1) of the first camera. The wearable device 101 may identify a direction of a gaze of a user (e.g., the user 105 of FIG. 1) by using an image (not illustrated) of the second camera. As an example, a direction in which the first camera is directed and a direction in which the second camera is directed may be opposite to each other.

The sensor 430 of the wearable device 101 according to an embodiment may generate electronic information that may be processed by the processor 410 and/or the memory 415 of the wearable device 101 from non-electronic information associated with the wearable device 101. The information may be referred to as sensor data. The sensor 430 may include a global positioning system (GPS) sensor for detecting a geographic location of the wearable device 101, an image sensor, an illumination sensor and/or a time-of-flight (ToF) sensor, and an inertial measurement unit (IMU) for detecting a physical motion of the wearable device 101.

In an embodiment, the communication circuitry 480 of the wearable device 101 may include a hardware component for supporting transmission and/or reception of an electrical signal between the wearable device 101 and an external electronic device (e.g., a server 405 of FIG. 4). The communication circuitry 480 may include, for example, at least one of a modem (MODEM), an antenna, and an optic/electronic (O/E) converter. The communication circuitry 480 may support transmission and/or reception of an electrical signal based on various types of protocol such as Ethernet, a local area network (LAN), a wide area network (WAN), a wireless fidelity (WiFi), Bluetooth, bluetooth low energy (BLE), ZigBee, long term evolution (LTE), 5G new radio (NR), and/or 6G.

In the memory 415 of the wearable device 101 according to an embodiment, one or more instructions (or commands) indicating a calculation and/or an operation to be performed by the processor 410 of the wearable device 101 on data may be stored. A set of the one or more instructions may be referred to as firmware, an operating system, a process, a routine, a sub-routine, and/or an application. For example, the wearable device 101 and/or the processor 410 may perform at least one of operations described later when a set of a plurality of instructions distributed in a form of the operating system, the firmware, a driver, and/or the application is executed. In the following, the application being installed in the wearable device 101 may mean that one or more instructions provided in the form of the application are stored in the memory 415, and that the one or more applications are stored in a format (e.g., a file with an extension specified by the operating system of the wearable device 101) executable by the processor 410. As an example, the application may include a program associated with a service provided to the user and/or a library.

Referring to FIG. 4, programs installed in the wearable device 101 may be classified into any one layer of different layers, including an application layer 440, a framework layer 450, and/or a hardware abstraction layer (HAL) 460 based on a target. For example, programs (e.g., a module or a driver) designed to target hardware (e.g., the display 420, the camera 425, and/or the sensor 430) of the wearable device 101 may be classified in the hardware abstraction layer 460. For example, FIG. 4 illustrates layers separately in the memory 415, but the layers may be logically separated. However, it is not limited thereto. According to an embodiment, the layers may also be stored in a specified region in the memory 415.

For example, within the framework layer 450, programs (e.g., a position tracker 453-1, a space recognizer 453-2, a gesture tracker 453-3, a gaze tracker 453-4, a controller tracker 453-5, a virtual space analyzer 455, and/or a renderer 454) designed to target at least one of the hardware abstraction layer 460 and/or the application layer 440 may be classified. The programs classified into the framework layer 450 may provide an application programming interface (API) that is executable based on another program.

For example, within the application layer 440, a program designed to target a user (e.g., the user 105 of FIG. 1) who controls the wearable device 101 may be classified. As an example of programs classified into the application layer 440, a first software application 441 is exemplified, but an embodiment is not limited thereto. For example, the programs (e.g., a software application) classified into the application layer 440 may cause execution of a function supported by the programs classified into the framework layer 450 by calling the API. For example, the wearable device 101 may display a screen representing a virtual environment on the display 420 based on execution of the first software application 441.

According to an embodiment, a virtual environment manager 451 may be configured for a virtual environment service. For example, the virtual environment manager 451 may include a platform (e.g., an Android platform) for supporting the virtual environment service. The virtual environment manager 451 may display a posture of a virtual object representing a posture of the user rendered using data obtained through the sensor 430 on a display. The virtual environment manager 451 may be referred to as a composition presentation manager.

For example, the virtual environment manager 451 may include a runtime service 451-1. As an example, the runtime service 451-1 may be referred to as an OpenXR runtime module. The runtime service 451-1 may be used to provide at least one of a pose prediction function of the user, a frame timing function, and/or a space input function through the wearable device 101. As an example, the runtime service 451-1 may be used to perform rendering for the virtual environment service to the user. For example, an application (e.g., unity or an OpenXR native application) may be implemented based on the runtime module 451-1.

For example, a perception abstract layer 452 may be used for data exchange between the virtual environment manager 451 and a perception service layer 453. In terms of being used for the data exchange between the virtual environment manager 451 and the perception service layer 453, the perception abstract layer 452 may be referred to as an interface. As an example, the perception abstract layer 452 may be referred to as an OpenPX. The perception abstract layer 452 may be used for a perception client and a perception service.

According to an embodiment, the perception service layer 453 may include one or more programs for processing data obtained from the sensor 430 (or the camera 425). The one or more programs may include at least one of the position tracker 453-1, the space recognizer 453-2, the gesture tracker 453-3, the gaze tracker 453-4, and the controller tracker 453-5.

For example, the position tracker 453-1 may identify a posture of the wearable device 101 using at least one sensor of the wearable device 101. As an example, the position tracker 453-1 may identify a 6 degrees of freedom pose (a 6 dof pose) of the wearable device 101 based on data obtained using a camera (e.g., the camera 425 of FIG. 4) and the IMU. The position tracker 453-1 may be referred to as a head tracking (HeT) module.

For example, the space recognizer 453-2 may be used to configure a surrounding environment of the wearable device 101 (or the user of the wearable device 101) into a three-dimensional virtual space. The space recognizer 453-2 may be used to reconstruct a surrounding environment of the wearable device 101 in three dimensions based on data obtained using a camera (e.g., the camera 425 of FIG. 4). The space recognizer 453-2 may identify at least one of a plane, an inclination, and a step based on the surrounding environment of the wearable device 101 reconstructed in three dimensions. The space recognizer 453-2 may be referred to as a scene understanding (SU) module.

For example, the gesture tracker 453-3 may be used to identify (or recognize) a pose and/or a gesture of a hand of the user of the wearable device 101. As an example, the gesture tracker 453-3 may identify the pose and/or the gesture of the hand of the user based on data obtained from at least one sensor. As an example, the gesture tracker 453-3 may identify the pose and/or the gesture of the hand of the user based on data (e.g., the image 110) obtained using the camera. The gesture tracker 453-3 may be referred to as a hand tracking (HaT) module.

For example, the gaze tracker 453-4 may be used to identify (or track) a movement of an eye of the user of the wearable device 101. As an example, the gaze tracker 453-4 may identify the movement of the eye of the user based on data obtained from at least one sensor. As an example, the gaze tracker 453-4 may identify the movement of the eye of the user based on data obtained using a camera (e.g., the gaze tracking camera 260-1 of FIGS. 2A and 2B) and/or an infrared light emitting diode (IR LED). The gaze tracker 453-4 may be referred to as an eye tracking (ET) module.

For example, the controller tracker 453-4 may be used to identify (or track) a movement of a controller connected to the wearable device 101. As an example, the controller tracker 453-4 may identify the movement of the controller based on receiving sensor data included in the controller through communication circuitry.

For example, in the perception service layer 453 of the wearable device 101, a face tracking module (not illustrated) for tracking a face of the user may be further included. For example, the face tracking module may be used to identify (or track) a movement of the face of the user and/or a facial expression of the user. The face tracking module may estimate the expression of the user based on the movement of the face of the user. As an example, the face tracking module may identify the movement of the face of the user and/or the facial expression of the user based on data (e.g., an image) obtained using the camera.

For example, the wearable device 101 may render a screen including a virtual object representing a posture of the user in a virtual environment by obtaining data representing a posture and/or a movement of the user from one or more programs included in the perception service layer 453 based on execution of the renderer 454. The wearable device 101 may render one or more images (e.g., a virtual object animation) for changing the posture of the virtual object by using posture information 470 based on the execution of the renderer 454. The wearable device 101 may change an overall posture of the virtual object based on inverse kinematics by identifying a posture of at least a part of the user. In a case of changing a portion of the virtual object, the wearable device 101 may change the overall posture of the virtual object by inferring a position where another portion of the virtual object is to be changed based on position information in the virtual environment using the inverse kinematics.

For example, the wearable device 101 may identify virtual environment information based on execution of the virtual environment analyzer 455. As an example, the virtual environment information may be received from the server 405 to the wearable device 101.

For example, the posture information 470 may include one or more images representing a posture of the virtual object. As an example, the wearable device 101 may receive the posture information 470 from the server 405. The wearable device 101 may control changing the posture of the virtual object displayed on the display by identifying the posture of the virtual object corresponding to the posture of the user using the posture information 470.

Referring to FIG. 4, the wearable device 101 and the server 405 may be connected to each other based on a wired network and/or a wireless network. The wired network may include networks such as Internet, a local area network (LAN), a wide area network (WAN), Ethernet, or a combination thereof. The wireless network may include networks such as long term evolution (LTE), 5g new radio (NR), wireless fidelity (WiFi), Zigbee, near field communication (NFC), Bluetooth, Bluetooth low-energy (BLE), or a combination thereof. Although the wearable device 101 and the server 405 have been illustrated as being directly connected, the wearable device 101 and the server 405 may be connected indirectly through an intermediate node in the network. In terms of being positioned outside the wearable device 101, the server 405 may be referred to as an external electronic device.

Referring to FIG. 4, in an embodiment, the server 405 may include at least one of a processor 410-1, memory 415-1, or communication circuitry 480-1. In the server 405, the processor 410-1, the memory 415-1, and the communication circuitry 480-1 may be electronically and/or operably coupled with each other via a communication bus. The processor 410-1, the memory 415-1, and the communication circuitry 480-1 included in the server 405 may include a hardware component and/or circuitry corresponding to the processor 410, the memory 415, and the communication circuitry 480 of the wearable device 101. Hereinafter, in order to reduce repetition, descriptions of hardware and/or software included in the server 405 may be omitted within a range overlapping the wearable device 101.

The server 405 according to an embodiment may transmit a screen representing the virtual environment to the wearable device 101 using a virtual environment plug-in 490. The server 405 may provide a virtual environment service to the wearable device 101 (or the user 105) using the virtual environment plug-in 490. In the server 405, the memory 415-1 may store a program including instructions for an interaction with the wearable device 101. As an example of the program, a first software application 441-1 is illustrated, but an embodiment is not limited thereto.

For example, the server 405 may receive data (e.g., sensor data) obtained from one or more programs included in the perception service layer 453 of the wearable device 101 from the wearable device 101. The server 405 may generate rendering data for changing the posture of the virtual object by using a renderer 454-1 using the received data. For example, the server 405 may generate rendering data for changing the posture of the virtual object to the wearable device 101 based on execution of the first software application 441-1. The server 405 may transmit the rendering data to the wearable device 101 to display a screen including the virtual object whose posture has been changed using the rendering data on the display 420 of the wearable device 101. However, it is not limited thereto.

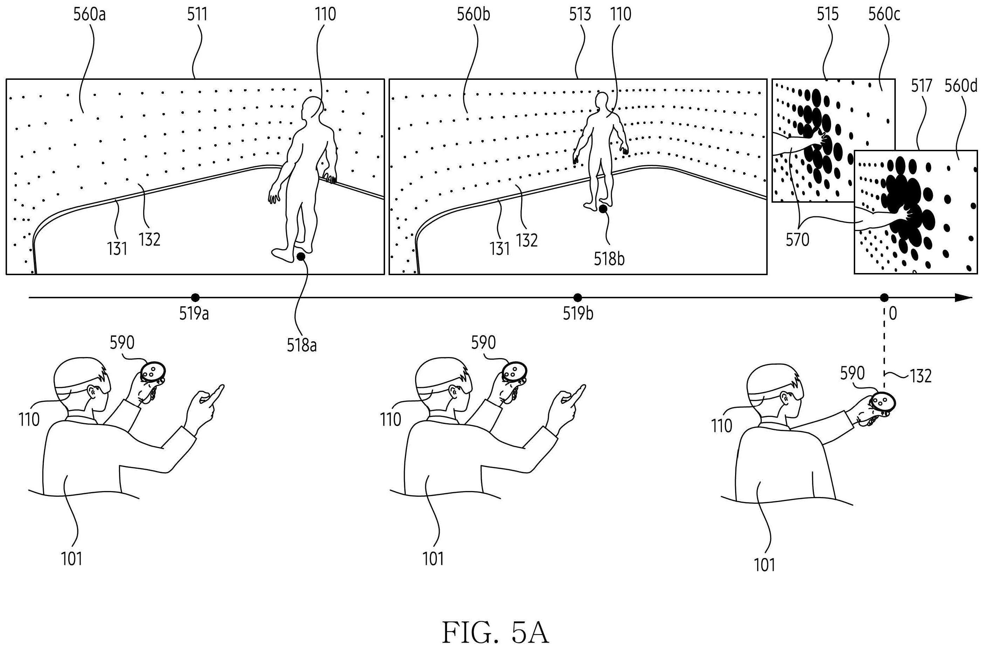

FIGS. 5A to 5C illustrate examples of an interaction between a boundary region (e.g., a boundary region 130) and a user (e.g., a user 110) within the boundary region. In FIGS. 5A to 5C, a situation in which the user 110 is positioned within a boundary region set by a wearable device 101 is described. The boundary region may be set to guide a boundary of a virtual environment to the user 110. The same reference number may represent the same description in different drawings.

Referring to FIG. 5A, the wearable device 101 may provide the user 110 with visual information for a boundary region 130 in a case that the user 110 of the wearable device 101 is positioned within a first threshold distance from the boundary region 130. For example, in the wearable device 101, in a case that a position of the wearable device 101 is within the first threshold distance from the boundary region 130, the wearable device 101 may display the boundary region 130. The boundary region 130 may include a boundary line 131 and a boundary surface 132. The wearable device 101 may display the boundary line 131 through a display (e.g., a display 420) such that the user 110 may recognize the boundary region 130 on a floor surface. The wearable device 101 may display a pattern image (e.g., a pattern image 560a or a pattern image 560b) on the boundary surface 132 through the display 420 such that the user 110 may recognize the boundary region 130 in a 3-dimensional space. The wearable device 101 may display the pattern image through the display 420 while displaying a virtual environment.

According to an embodiment, the wearable device 101 may display a pattern image according to the position of the wearable device 101. For example, a first screen 511 represents an avatar of the user 110 of the wearable device 101 positioned at a first point 518a within the boundary region 130. At the first point 518a, a distance between the boundary region 130 and the wearable device 101 may be a first distance 519a. The wearable device 101 may display the pattern image 560a based on the first distance 519a. A second screen 513 represents an avatar of the user 110 of the wearable device 101 positioned at a second point 519b within the boundary region 130. At the second point 518b, a distance between the boundary region 130 and the wearable device 101 may be a second distance 519b. The wearable device 101 may display the pattern image 560b based on the second distance 519b.

A pattern image (e.g., the pattern image 560a or the pattern image 560b) displayed on the boundary surface 132 of the boundary region 130 may include a pattern (e.g., a grid) in which a specified shape is repeated. As the user 110 becomes closer to the boundary region 130, the wearable device 101 may set a density of a specified shape within the grid to be higher. For example, as the user 110 becomes closer to the boundary region 130, the wearable device 101 may generate a pattern image such that the density of the specified shape increases. As an example, the second point 518b may be closer to the boundary region 130 than the first point 518a. The first distance 519a may be longer than the second distance 519b. The pattern image 560a may include a first grid in which a circle is repeated. The pattern image 560b may include a second grid in which a circle is repeated. A density of the circle in the second grid may be higher than a density of the circle in the first grid. As the user 110 becomes closer to the boundary region 130, since a shape (e.g., a circle) on the pattern image is densely displayed, the user 110 of the wearable device 101 may recognize that the wearable device 101 is closer to the boundary region 130.

The user 110 may move at least a part of a body of the user 110 closer to the boundary region 130. For example, the user 110 may wear the wearable device 101, and a hand of the user 110 may hold a controller 590 connected to the wearable device 101. Hereinafter, as an example, the controller 590 is described as equipment that may be gripped by the hand of the user 110, but the controller 590 may also be another type of equipment. For example, the controller 590 may also be wearable equipment (e.g., a ring, a bracelet, a glove, an armband, or a wristband) wearable on at least a part of a body of the user 110. The wearable device 101 may obtain information for a movement of the hand of the user 110 through a movement of the controller 590. According to an embodiment, the wearable device 101 may display a pattern image according to a position of the controller 590. In a case that the position of the controller 590 is within a second threshold distance from the boundary region 130, the wearable device 101 may display a pattern image to represent an interaction between the controller 590 and the boundary region 130. In order to more effectively represent the interaction, as the position of the controller 590 becomes closer to the boundary region 130, the wearable device 101 may merge shapes in a pattern image (e.g., the pattern image 560b) and display the merged shapes. Hereinafter, in describing embodiments of the present disclosure, the controller 590 is exemplified as an input means for representing an interaction between the boundary region 130 and the user 110, but the embodiments of the present disclosure are not limited thereto. Not only the controller 590 connected to the wearable device 101, but also at least a part of a body of the user 110 may be used as an input means of the wearable device 101. For example, the wearable device 101 may detect a user input by detecting a part (e.g., a left hand, a right hand, an arm, or a gesture) of a body of the user 110 or a movement of the part through a camera (e.g., a camera 425) or a sensor 430 of the wearable device 101.

For example, a third screen 515 represents at least a part 570 (e.g., a hand) of an avatar of the user 110 positioned within the second threshold distance from the boundary region 130. The wearable device 101 may display a pattern image 560c based on identifying that the position of the controller 590 is within the second threshold distance from the boundary region 130. The wearable device 101 may display a merged shape by connecting shapes positioned at a certain distance from a point indicated by a direction of the controller 590 among shapes of the pattern image (e.g., the pattern image 560b) being displayed. The wearable device 101 may display the pattern image 560c including the merged shape. For example, a fourth screen 517 represents the at least a part 570 (e.g., the hand) of an avatar of the user 110 touching the boundary region 130. The wearable device 101 may display a pattern image 560d based on identifying that the controller 590 is positioned across the boundary region 130. The wearable device 101 may display a merged shape by connecting shapes positioned at a certain distance from a point indicated by a direction of the controller 590 among shapes of the pattern image (e.g., the pattern image 560b or the pattern image 560c) being displayed. In the wearable device 101, in order to represent an interaction more strongly, on the fourth screen 517, the wearable device 101 may merge more shapes than in the third screen 517. The wearable device 101 may display the pattern image 560d including a shape based on the merging.

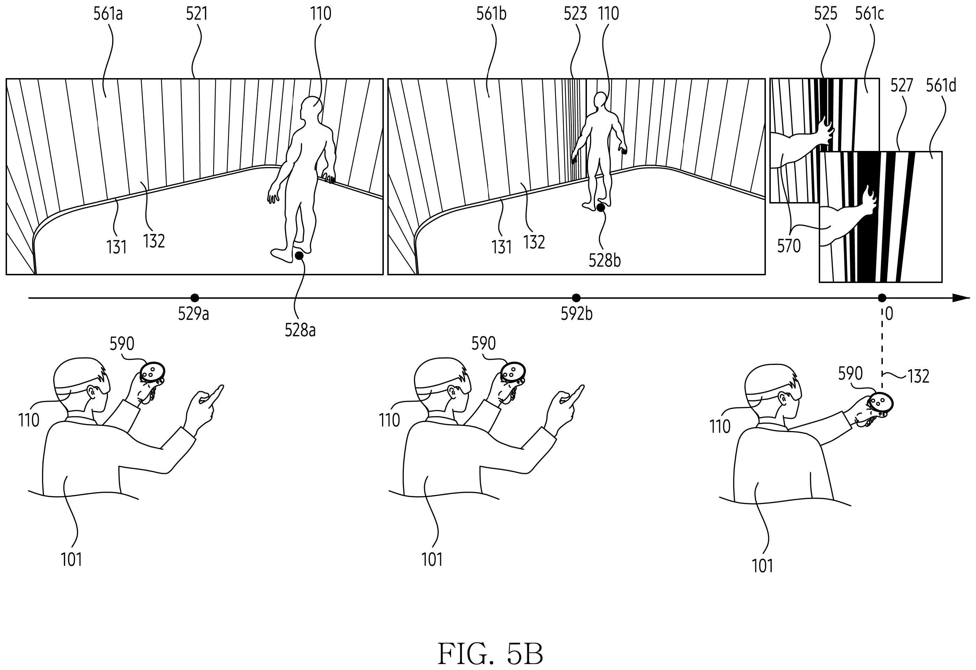

In FIG. 5A, a circle is exemplified as a basic shape forming a pattern image (e.g., the pattern image 560a, the pattern image 560b, the pattern image 560c, or the pattern image 560d), but embodiments of the present disclosure are not limited thereto. In addition to the circle, shapes such as a '+' symbol, a quandrangle, a polygon, '*', '#', and 'X' may be used to represent the boundary surface 132 in a pattern image. In FIG. 5B, a pattern image according to a straight motif (e.g., a rectangle) instead of a circle is exemplified.

Referring to FIG. 5B, the wearable device 101 may provide the user 110 with visual information for the boundary region 130 in a case that the user 110 of the wearable device 101 is positioned within a first threshold distance from the boundary region 130. For example, in the wearable device 101, in a case that the position of the wearable device 101 is within the first threshold distance from the boundary region 130, the wearable device 101 may display the boundary region 130. The boundary region 130 may include the boundary line 131 and the boundary surface 132. The wearable device 101 may display the boundary line 131 through the display (e.g., the display 420) such that the user 110 may recognize the boundary region 130 on a floor surface. The wearable device 101 may display a pattern image (e.g., a pattern image 561a or a pattern image 561b) on the boundary surface 132 through the display 420 such that the user 110 may recognize the boundary region 130 in a 3-dimensional space. The wearable device 101 may display the pattern image through the display 420 while displaying a virtual environment.

According to an embodiment, the wearable device 101 may display a pattern image according to the position of the wearable device 101. For example, a first screen 521 represents an avatar of the user 110 of the wearable device 101 positioned at a first point 528a within the boundary region 130. At the first point 528a, a distance between the boundary region 130 and the wearable device 101 may be a first distance 529a. The wearable device 101 may display the pattern image 561a based on the first distance 529a. A second screen 523 represents an avatar of the user 110 of the wearable device 101 positioned at a second point 529b within the boundary region 130. At the second point 528b, a distance between the boundary region 130 and the wearable device 101 may be a second distance 529b. The wearable device 101 may display the pattern image 561b based on the second distance 529b.

A pattern image (e.g., the pattern image 561a or the pattern image 561b) displayed on the boundary surface 132 of the boundary region 130 may include a pattern in which a specified motif (e.g., a stripe) is repeated. As the user 110 becomes closer to the boundary region 130, the wearable device 101 may set a density of the specified motif to be higher. For example, as the user 110 becomes closer to the boundary region 130, the wearable device 101 may generate a pattern image such that the density of the specified motif increases. As an example, the first point 528a may be closer to the boundary region 130 than the second point 529b. The first distance 529a may be longer than the second distance 529b. The pattern image 561a may include a first stripe. The pattern image 561b may include a second stripe. An interval between a line and a line in the second stripe may be smaller than an interval between a line and a line in the first stripe. As the user 110 becomes closer to the boundary region 130, since the interval between the lines of the stripe is densely displayed, the user 110 of the wearable device 101 may recognize that the wearable device 101 is closer to the boundary region 130.

The user 110 may move at least a part of a body of the user 110 closer to the boundary region 130. For example, the user 110 may wear the wearable device 101, and a hand of the user 110 may hold the controller 590 connected to the wearable device 101. The wearable device 101 may obtain information for a movement of the hand of the user 110 through a movement of the controller 590. According to an embodiment, the wearable device 101 may display a pattern image according to a position of the controller 590. In a case that the position of the controller 590 is within the second threshold distance from the boundary region 130, the wearable device 101 may display a pattern image to represent an interaction between the controller 590 and the boundary region 130. In order to more effectively represent the interaction, as the position of the controller 590 becomes closer to the boundary region 130, the wearable device 101 may connect the lines within the stripe of a pattern image (e.g., the pattern image 561b). The wearable device 101 may display a shape (e.g., a rectangle) including the lines.

For example, a third screen 525 represents the at least a part 570 (e.g., a hand) of an avatar of the user 110 positioned within the second threshold distance from the boundary region 130. The wearable device 101 may display a pattern image 561c based on identifying that the position of the controller 590 is within the second threshold distance from the boundary region 130. The wearable device 101 may display a shape (e.g., a quandrangle) including lines by connecting the lines positioned at a certain distance from a point indicated by a direction of the controller 590 among shapes of the pattern image (e.g., the pattern image 561b) being displayed. The wearable device 101 may display the pattern image 561c including a shape displayed thicker than an individual line based on the connection. For example, a fourth screen 527 represents the at least a part 570 (e.g., the hand) of an avatar of the user 110 touching the boundary region 130. The wearable device 101 may display a pattern image 561d based on identifying that the controller 590 is positioned across the boundary region 130. The wearable device 101 may connect lines positioned at a certain distance from a point indicated by a direction of the controller 590 among lines of the pattern image (e.g., the pattern image 561b or the pattern image 561c) being displayed. As the lines are connected, a shape (e.g., a quandrangle) may be formed. The wearable device 101 may display the pattern image 561d including a shape (e.g., a quandrangle) displayed thicker than an individual line based on the connection. In the wearable device 101, in order to represent an interaction more strongly, on the fourth screen 527, the wearable device 101 may connect more lines than in the third screen 527. Accordingly, a size of a shape displayed on an area corresponding to the position of the controller 590 on the fourth screen 527 may be larger than a size of a shape displayed on an area corresponding to the position of the controller 590 on the third screen 527.

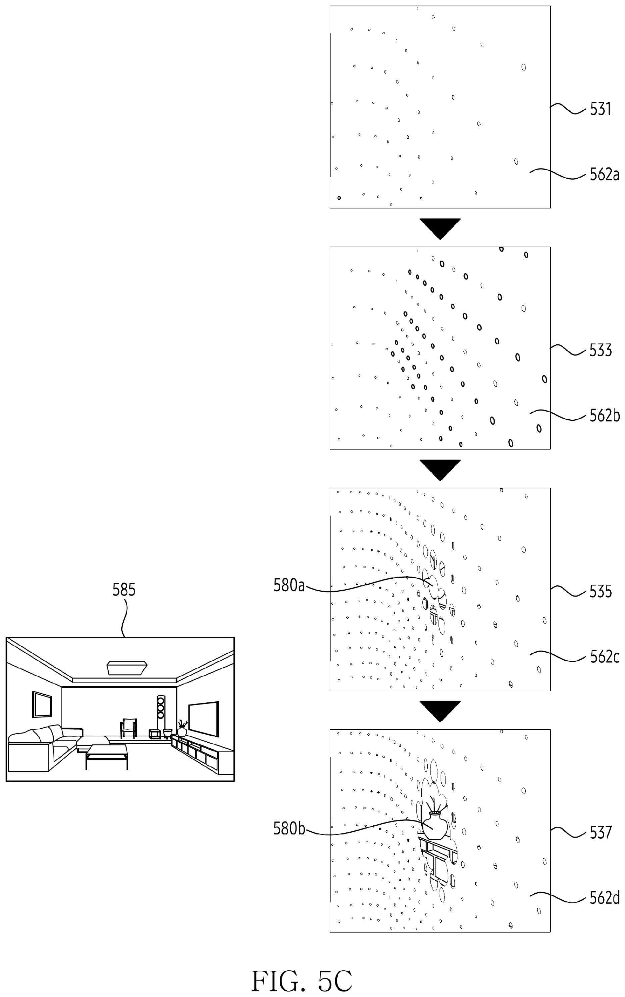

In FIGS. 5A to 5B, an example in which a pattern image is displayed differently in the boundary region 130 according to the position of the wearable device 101 and/or the position of the controller 590 has been described. The user 110 may desire to know about a real environment outside the boundary region 130 by moving at least a part (e.g., a hand) of a body of the user 110 close to the boundary region 130. In order to display an external image corresponding to the real environment according to the intention of the user 110, the wearable device 101 may perform a pass-through operation. Hereinafter, an example of performing the pass-through operation will be described through FIG. 5C.

Referring to FIG. 5C, the wearable device 101 may display a pattern image to represent the boundary region 130. The user 110 of the wearable device 101 may move. According to an embodiment, as the position of the wearable device 101 becomes closer to the boundary region 130 (e.g., the boundary surface 132 of the boundary region 130), the pattern image displayed on the boundary surface 132 may vary. According to an embodiment, as the positions of not only the wearable device 101 but also the controller 590 become closer to the boundary region 130 (e.g., the boundary surface 132 of the boundary region 130), not only a pattern image but also an external image 585 according to the pass-through operation may be displayed on the boundary surface 132. For example, the user 110 of the wearable device 101 may be moving closer to the boundary region 130. A pattern image 562a of a first screen 531, a pattern image 562b of a second screen 533, a pattern image 562c of a third screen 535, and a pattern image 562d of a fourth screen 537 may be sequentially displayed on the boundary surface 132.

In the third screen 535 and the fourth screen 537, the controller 590 connected to the wearable device 101 may be within the second threshold distance from the boundary region 130. As a non-limiting example, if the position of the controller 590 is within the second threshold distance from the boundary region 130 regardless of whether it is over the boundary surface 132 or within the boundary surface 132, the wearable device 101 may display at least a portion of the external image 585 through a virtual area corresponding to the position of the controller 590. The wearable device 101 may perform the pass-through operation based on the position of the controller 590. The pass-through operation may include an operation of displaying at least a portion of the external image 585 corresponding to an FOV of the user 110 while displaying a virtual image of the virtual environment. The external image 585 may be obtained through a camera (e.g., the camera 425) of the wearable device 101. The wearable device 101 may determine a virtual area to display the at least a portion of the external image 585 obtained through the camera. By displaying the at least a portion of the external image 585 on the virtual area through the display (e.g., the display 420), the wearable device 101 may provide the user 110 with not only a VR experience but also an augmented-reality (AR) and/or mixed reality (MR) experience.

The wearable device 101 may obtain a screen to be stored in a display buffer and displayed through the display by performing rendering. For example, the wearable device 101 may dispose an image layer corresponding to the external image 585 on an image layer corresponding to a virtual area 580 to display at least a portion of the external image 585, in the virtual area 580. The wearable device 101 may obtain the third screen 535 and the fourth screen 537 by performing rendering such that the virtual area 580 and the external image 585 are overlappingly displayed on the virtual image of the virtual environment. The external image 585 may be referred to as a pass-through image in terms of a perspective in which a surrounding environment of the wearable device 101 is viewed by the user 110 passing through a virtual image and a pattern image (e.g., the pattern image 562c or the pattern image 562d) of the virtual environment. in terms that at least a portion of the external image 585 is viewed by the user 110 through at least a portion of a virtual image and the pattern image (e.g., the pattern image 562c or the pattern image 562d) of a virtual environment, the external image 585 may also be referred to as a punch-through image. In addition to a virtual area, the virtual area 580 may be referred to as a virtual surface, a punch-through area, the virtual surface, a punch-through surface, a pass-through area, a pass-through surface, a field of view surface, a field of view area, a transition surface, a transition space, a transition area, a passage surface, a passage area, or a term having a technical meaning equivalent thereto.

According to an embodiment, the wearable device 101 may determine a size of the virtual area 580 according to the position of the controller 590. While a virtual image and a pattern image of the virtual environment are displayed, the wearable device 101 may display at least a portion of an external image in the virtual area 580 according to the determined size through the display 420. For example, on the third screen 535, the wearable device 101 may display at least a portion of the external image 585 on a virtual area 580a. On the fourth screen 537, the wearable device 101 may display at least a portion of the external image 585 on a virtual area 580b. Since the controller 590 on the fourth screen 537 is closer to the boundary region 130 than the controller 590 on the third screen 535, the virtual area 580b may be wider than the virtual area 580a. A size of the virtual area 580b may be larger than a size of the virtual area 580a.

According to an embodiment, the wearable device 101 may determine a position of the virtual area 580 according to the position of the controller 590. The wearable device 101 may obtain information for the position of the controller 590 according to an intention of the user 110 to obtain information for a real environment. The wearable device 101 may generate the virtual area 580 at a position (e.g., a position including a point at which a straight line from the controller 590 touches the boundary surface 132) corresponding to the controller 590 on the boundary surface 132 of the boundary region 130. While displaying a virtual environment and a pattern image through the display 420, the wearable device 101 may display at least a portion of an external image in the virtual area.

In FIGS. 5A to 5C, one controller 590 connected to the wearable device 101 is illustrated, but embodiments of the present disclosure are not limited thereto. The number of controllers connected to the wearable device 101 may be two or more. For example, controllers connected to a wearable device may include a first controller for the left hand and a second controller for the right hand. If at least one controller of the controllers is within the second threshold distance from the boundary region 130, at least a portion of an external image according to the pass-through operation may be displayed in a virtual area according to the position of the at least one controller.

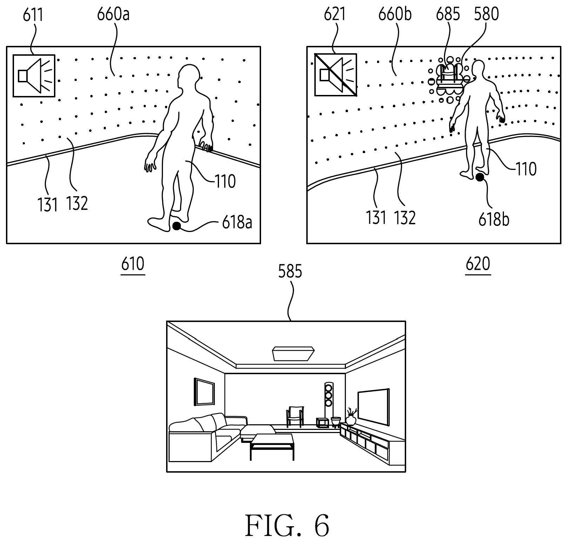

FIG. 6 illustrates an example of a virtual area and a sound control for an external image. The same reference number may represent the same description in different drawings.

Referring to FIG. 6, a wearable device 101 may display a pattern image 660 according to a position of the wearable device 101. For example, a first screen 610 represents an avatar of a user 110 of the wearable device 101 positioned at a first point 618a within a boundary region 130. Based on a distance between the wearable device 101 and the boundary region 130 at the first point 618a, the wearable device 101 may display a pattern image 660a. The pattern image 660a may include a first grid formed of circles. For example, a second screen 620 represents an avatar of the user 110 of the wearable device 101 positioned at a second point 618b within the boundary region 130. Based on a distance between the wearable device 101 and the boundary region 130 at the second point 618b, the wearable device 101 may display a pattern image 660b. The pattern image 660b may include a second grid formed of circles. An interval between the circles of the second grid may be narrower than an interval between the circles of the first grid.

The wearable device 101 may display at least a portion 685 of an external image 585 on a virtual area 580 based on the position of the wearable device 101 and/or a position of the controller 590. According to an embodiment, the wearable device 101 may display a virtual image of a virtual environment. The virtual environment may provide a sound effect. The wearable device 101 may output sound signals for a sense of immersion in the virtual environment while an application corresponding to the virtual environment is being executed. Since the virtual area 580 is not generated while the pattern image 660a is displayed, the user 110 may perceive it as an enclosed virtual space. The wearable device 101 at the first point 618a may output a first sound signal having a first volume 611. On the other hand, since the at least a portion 685 of the external image 585 is displayed on the virtual area 580 while the pattern image 660b is displayed, the user 110 may recognize becoming closer to a real environment. The wearable device 101 at the second point 618b may output a second sound signal having a second volume 612. As the at least a portion 685 of the external image 585 corresponding to the real environment is exposed, a sense of immersion in the virtual environment may decrease. In order to notify the user 110 that it is becoming closer to a real environment, the wearable device 101 may reduce a volume. For example, the second volume 612 of the second sound signal may be lower than the first volume 611 of the first sound signal. The wearable device 101 may set the second volume 612 lower than the first volume 611 of the first sound signal while the at least a portion 685 of the external image 585 is displayed through the virtual area 580, and output the second sound signal according to the second volume 612. As another example, the wearable device 101 may also turn off the output of the sound signal while the at least a portion 685 of the external image 585 is displayed through the virtual area 580. A size of the second volume 612 may be "0".

In FIG. 6, an example of outputting a sound associated with a virtual environment in an application for providing the virtual environment has been described. However, not only simply providing the sound of the virtual environment, but also coupling and outputting a sound associated with a real environment with the sound associated with the virtual environment may be understood as an embodiment of the present disclosure. The wearable device 101 may output a synthesized sound signal by mixing a sound signal (hereinafter, a first sound signal) associated with the virtual environment and a sound signal (hereinafter, a second sound signal) associated with the real environment. As an example, as the user 110 approaches the boundary region 130, the wearable device 101 may change a synthesis ratio of the first sound signal and the second sound signal. In order to notify the user 110 that it becomes closer to a real environment, the wearable device 101 may increase a weight to be applied to the second sound signal and decrease a weight to be applied to the first sound signal. As another example, as the user 110 moves away from the boundary region 130, the wearable device 101 may change a synthesis ratio of the first sound signal and the second sound signal. In order to notify the user 110 that it moves away from a real environment, the wearable device 101 may decrease a weight to be applied to the second sound signal and increase a weight to be applied to the first sound signal.

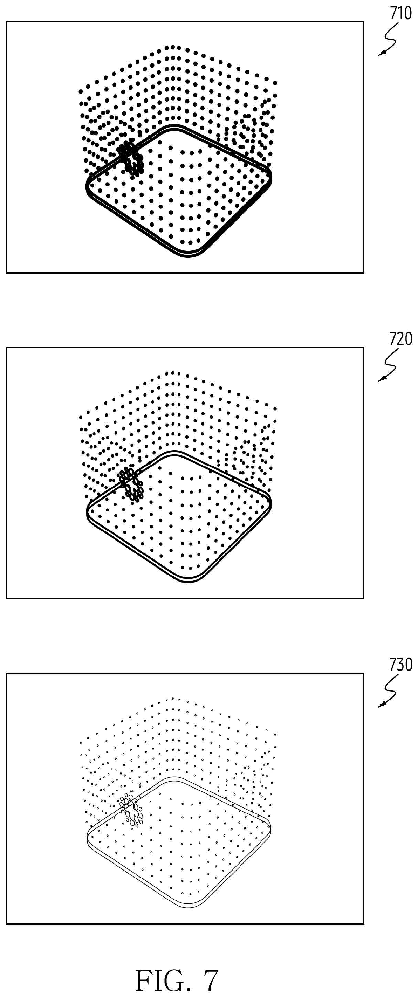

FIG. 7 illustrates an example of displaying a pattern image according to a status of a user (e.g., a user 110). The same reference number may represent the same description in different drawings.

Referring to FIG. 7, a wearable device 101 may obtain information for a status of the user 110. For example, the wearable device 101 may obtain information (e.g., a heart rate or a body temperature) for the status of the user 110 through one or more sensors. For example, the wearable device 101 may obtain information for the status of the user 110 through data from an external electronic device. For example, the wearable device 101 may obtain information for the status of the user 110 through a camera. For example, the wearable device 101 may obtain information (e.g., a wearing time) for the status of the user 110 based on an internal timer.

The wearable device 101 may provide information for the status of the user 110 through a visual effect for a boundary region 130. For example, the wearable device 101 may determine a color of the boundary region 130 based on information for the status of the user 110. As an example, the wearable device 101 may determine a color (e.g., a green color, a yellow color, or a red color) of the boundary region 130 according to a heart rate or a body temperature of the user 110. According to an embodiment, the wearable device 101 may obtain a heart rate for a certain time. For example, the wearable device 101 may apply a specified visual effect (e.g., a green color) to the boundary region 130 to indicate that a heart rate of the user 110 is less than the specific heart rate. For example, the wearable device 101 may apply a specified visual effect (e.g., a red color) to the boundary region 130 to indicate that a heart rate of the user 110 is equal to or greater than the specific heart rate. Through the specified visual effect (e.g., a red color), the wearable device 101 may guide the user to pause the use of the wearable device 101 and take a rest.

For example, the wearable device 101 may determine a thickness of a boundary line 131 of the boundary region 130 based on information for the status of the user 110. As an example, the wearable device 101 may determine a thickness (e.g., indicating a degree of thickness within a range from 1 to 10) of the boundary line 131 according to a heart rate or a body temperature of the user 110. According to an embodiment, the wearable device 101 may notify information for a physical condition of the user 110 based on the thickness of the boundary region 130. For example, the wearable device 101 may display the boundary region 130 on a first screen 710 through a first visual effect. For example, the thickness of the boundary region 130 may be 10. On a second screen 720, the boundary region 130 may be displayed through a second visual effect. For example, the thickness of the boundary region 130 may be 5. The wearable device 101 may display the boundary region 130 on a third screen 730 through the first visual effect. For example, the thickness of the boundary region 130 may be 1.

For example, the wearable device 101 may determine an animation effect of the boundary region 130 based on information for the status of the user 110. As an example, the wearable device 101 may determine an animation effect (e.g., a flickering frequency) of the boundary region 130 according to a time during which the user 110 wears the wearable device 101. According to an embodiment, the wearable device 101 may obtain information for a body temperature. For example, the wearable device 101 may apply a specified visual effect (e.g., 2 blinks per second) to the boundary region 130 to indicate that the body temperature of the user 110 is within a stable range. The wearable device 101 may apply a specified visual effect (e.g., 5 blinks per second) to the boundary region 130 to indicate that the body temperature of the user 110 is equal to or greater than a threshold. Through the specified visual effect, the wearable device 101 may guide the user to pause the use of the wearable device 101 and take a rest.

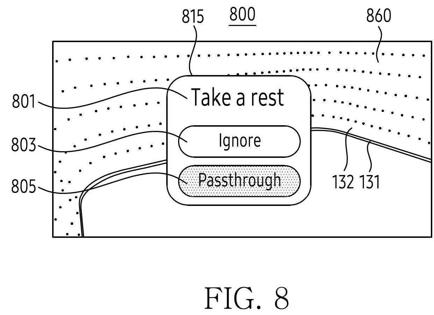

FIG. 8 illustrates an example of a notification message for notifying a status of a user (e.g., a user 110). Long-term use of a wearable device 101 may cause excessive fatigue in the user 110. Hereinafter, in FIG. 8, an example of a message for transmitting an alert to the wearable device 101 will be described. The same reference number may represent the same description in different drawings.

Referring to FIG. 8, on a screen 800, the wearable device 101 may display a boundary line 131 of a boundary region 130 and display a pattern image 860 on a boundary surface 132.

The wearable device 101 may obtain information for a status of the user 110. The wearable device 101 may obtain information for a usage time of the user 110. For example, the wearable device 101 may obtain information for a time during which the user 110 wears the wearable device 101 based on an internal timer. For example, the wearable device 101 may obtain information for a time during which the user 110 experiences a virtual environment based on an execution time of an application providing the virtual environment.

The wearable device 101 may display a notification message 815 on a display (e.g., a display 420) based on identifying that the usage time is equal to or greater than a threshold. For example, the notification message 815 may include a text 801 (e.g., Take a rest) to guide the user to take a rest. In addition, the notification message 815 may include a button 803 for closing the notification message 815. According to an embodiment, in response to a user input (e.g., a button input on the wearable device 101 or an input on a controller 590) to the button 803, the wearable device 101 may terminate the display of the notification message 815. The wearable device 101 may maintain display of a virtual image of the virtual environment and a pattern image 860. In addition, the notification message 815 may include a button 805 for displaying a pass-through screen. According to an embodiment, in response to a user input (e.g., a button input on the wearable device 101 or an input on the controller 590) to the button 805, the wearable device 101 may terminate the display of the virtual image and the display of the pattern image 860 of the virtual environment. The wearable device 101 may perform a pass-through operation. The wearable device 101 may display an external image obtained through a camera (e.g., a camera 425).

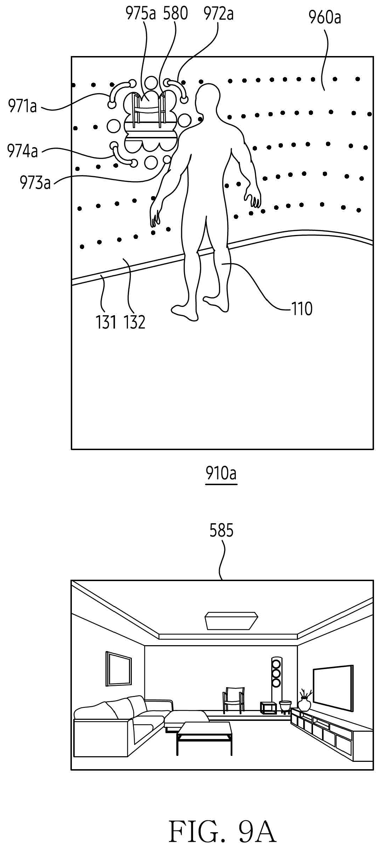

FIGS. 9A to 9E illustrate an example of a visual object for an area adjustment of a virtual area (e.g., a virtual area 580). A wearable device 101 may display at least a portion of an external image 585 on the virtual area 580 based on a position of the wearable device 101 and/or a position of a controller 590 connected to the wearable device 101. In a situation where the external image 585 is displayed, examples for controlling a size of the virtual area 580 are described. The same reference number may represent the same description in different drawings.

Referring to FIG. 9A, the wearable device 101 may generate the virtual area 580 on a boundary surface 132 of a boundary region 130. The wearable device 101 may display at least a portion 975a of the external image 585 obtained through a camera (e.g., a camera 425) of the wearable device 101 through the virtual area 580. A user of the wearable device 101 may desire to increase or decrease the size of the virtual area 580. On a first screen 910a, the wearable device 101 may display the at least a portion 975a of the external image 585 through the virtual area 580 while displaying a pattern image 960a including circles and a virtual environment.

According to an embodiment, the wearable device 101 may receive a first user input for the virtual area 580. The first user input may be used to display a visual object (e.g., a first visual object 971a, a second visual object 972a, a third visual object 973a, or a fourth visual object 974a) for an area adjustment of the virtual area 580. For example, in the wearable device 101, in a case that gaze information of a user 110 is directed toward the virtual area 580 for a specified time (e.g., N seconds, N is a predetermined natural number), the wearable device 101 may initiate display of the visual object. For another example, in the wearable device 101, in a case that the position of the controller 590 remains in the virtual area 580 for a specified time (e.g., N seconds, N is a predetermined natural number), the wearable device 101 may initiate display of the visual object. For still another example, the wearable device 101 may initiate display of the visual object through a user input using another controller other than the controller 590 used to display the virtual area 580.

According to an embodiment, the wearable device 101 may display a visual object (e.g., the first visual object 971a, the second visual object 972a, the third visual object 973a, or the fourth visual object 974a) for an area adjustment (e.g., a size adjustment or a position adjustment) of the virtual area 580 in response to the first user input. The visual object may be used as a soft handler for an area adjustment of the virtual area 580. For example, the wearable device 101 may display a visual object (e.g., the first visual object 971a, the second visual object 972a, the third visual object 973a, or the fourth visual object 974a) around the virtual area 580 to control the size of the virtual area 580.

According to an embodiment, the wearable device 101 may adjust the size of the virtual area 580 based on a second user input on the visual object. For example, the user 110 may select a visual object (e.g., the first visual object 971a, the second visual object 972a, the third visual object 973a, or the fourth visual object 974a) through the controller 590, and then move the controller 590 from the selected visual object in a direction away from the virtual area 580. The wearable device 101 may recognize that the intention of the user 110 is to increase the size of the virtual area 580 by obtaining an input for the selection and tracking the movement direction. The wearable device 101 may change the size of the virtual area 580 based on the input of the visual object through the controller 590 and the movement of the controller 590. For example, the size of the virtual area 580 may be changed from the first size to the second size. The second size may be larger than the first size. In this way, the user 110 of the wearable device 101 may adjust the size of the virtual area 580 not only through one visual object but also through a plurality of visual objects. For example, the wearable device 101 may increase the size of the virtual area 580 through a gesture that spreads the first visual object 971a and the third visual object 973a in different directions. For example, the wearable device 101 may also decrease the size of the virtual area 580 through a gesture that pinches the second visual object 972a and the fourth visual object 974a in different directions.

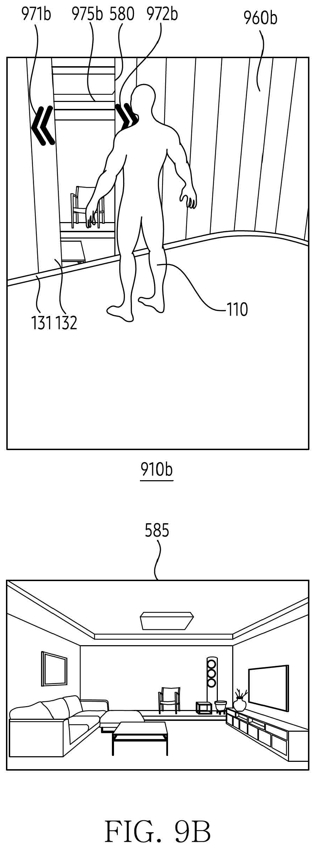

Referring to FIG. 9B, the wearable device 101 may generate the virtual area 580 on the boundary surface 132 of the boundary region 130. The wearable device 101 may display at least a portion 975b of the external image 585 obtained through a camera (e.g., the camera 425) of the wearable device 101 through the virtual area 580. A user of the wearable device 101 may desire to increase or decrease the size of the virtual area 580. On the second screen 910b, the wearable device 101 may display the at least a portion 975b of the external image 585 through the virtual area 580 while displaying a pattern image 960b including lines and a virtual environment.

According to an embodiment, the wearable device 101 may receive a first user input for the virtual area 580. The first user input may be used to display a visual object (e.g., a first visual object 971b or a second visual object 972b) for an area adjustment of the virtual area 580. For example, in the wearable device 101, in a case that gaze information of the user 110 is directed toward the virtual area 580 for a specified time (e.g., N seconds, N is a predetermined natural number), the wearable device 101 may initiate display of the visual object. For another example, in the wearable device 101, in a case that the position of the controller 590 remains in the virtual area 580 for a specified time (e.g., N seconds, N is a predetermined natural number), the wearable device 101 may initiate display of the visual object. For still another example, the wearable device 101 may initiate display of the visual object through a user input using another controller other than the controller 590 used to display the virtual area 580.

According to an embodiment, the wearable device 101 may display a visual object for an area adjustment (e.g., a size adjustment or a position adjustment) of the virtual area 580 in response to the first user input. The visual object may be used as a handler for an area adjustment of the virtual area 580. For example, the wearable device 101 may display a visual object (e.g., the first visual object 971b or the second visual object 972b) around the virtual area 580 to control the size of the virtual area 580.

According to an embodiment, the wearable device 101 may adjust the size of the virtual area 580 based on a second user input on the visual object. For example, the user 110 may select a visual object (e.g., the first visual object 971b or the second visual object 972b) through the controller 590, and then move the controller 590 from the selected visual object in a direction away from the virtual area 580. The wearable device 101 may recognize that the intention of the user 110 is to increase the size of the virtual area 580 by obtaining an input for the selection and tracking the movement direction. The wearable device 101 may change the size of the virtual area 580 based on the input of the visual object through the controller 590 and the movement of the controller 590. For example, the size of the virtual area 580 may be changed from a first size to a second size. The second size may be larger than the first size. In this way, the user 110 of the wearable device 101 may adjust the size of the virtual area 580 not only through one visual object but also through a plurality of visual objects. For example, the wearable device 101 may increase the size of the virtual area 580 through a gesture that spreads the first visual object 971b and the second visual object 972b in different directions. For example, the wearable device 101 may also decrease the size of the virtual area 580 through a gesture that pinches the first visual object 971b and the second visual object 972b in different directions.

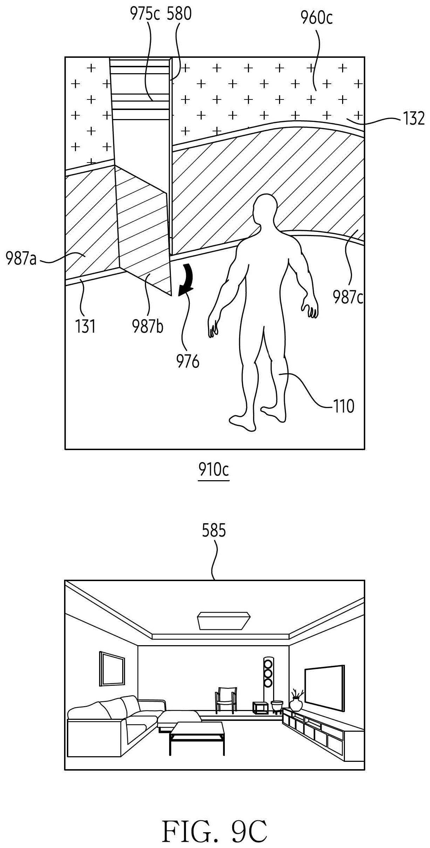

Referring to FIG. 9C, the wearable device 101 may generate the virtual area 580 on the boundary surface 132 of the boundary region 130. The wearable device 101 may display at least a portion 975c of the external image 585 obtained through a camera (e.g., the camera 425) of the wearable device 101 through the virtual area 580. On a third screen 910c, the wearable device 101 may display the at least a portion 975c of the external image 585 through the virtual area 580 while displaying a pattern image 960c including lines and a virtual environment. The wearable device 101 may display a visual object (e.g., a first portion 987a, a second portion 987b, and a third portion 987c) in a form of a fence to provide the user 110 with a more intuitive user experience that is closer to a real environment. For example, on the boundary surface 132, the wearable device 101 may display the first portion 987a and the third portion 987c corresponding to the fence, and the second portion 987b corresponding to a door of the fence. A portion of the external image 585 may be occluded by the user 110 through the second portion 987b.

According to an embodiment, the wearable device 101 may receive a first user input for the virtual area 580. The first user input may be used to display a visual object (e.g., a visual object 976) for an area adjustment of the virtual area 580. For example, in the wearable device 101, in a case that gaze information of a user 110 is directed toward the virtual area 580 for a specified time (e.g., N seconds, N is a predetermined natural number), the wearable device 101 may initiate display of the visual object. For another example, in the wearable device 101, in a case that the position of the controller 590 remains in the virtual area 580 for a specified time (e.g., N seconds, N is a predetermined natural number), the wearable device 101 may initiate display of the visual object. For still another example, the wearable device 101 may initiate display of the visual object through a user input using another controller other than the controller 590 used to display the virtual area 580.

According to an embodiment, the wearable device 101 may display the visual object 976 for an area adjustment (e.g., a size adjustment or a position adjustment) of the virtual area 580 in response to the first user input. The wearable device 101 may further display the visual object 976 for guiding a user input of the user 110. For example, the wearable device 101 may display an arrow object indicating a direction in which the door of the fence opens, as the visual object 976.

According to an embodiment, the wearable device 101 may adjust the size of the virtual area 580 based on a second user input on the visual object. For example, the user 110 may select a visual object (e.g., the visual object 976 or the second portion 987b) through the controller 590, and then move the controller 590 from the selected visual object in a direction away from the virtual area 580. The wearable device 101 may recognize that the intention of the user 110 is to increase the size of the virtual area 580 by obtaining an input for the selection and tracking the movement direction. For example, a portion of the external image 585 occluded through the second portion 987b may be displayed in response to the second user input.

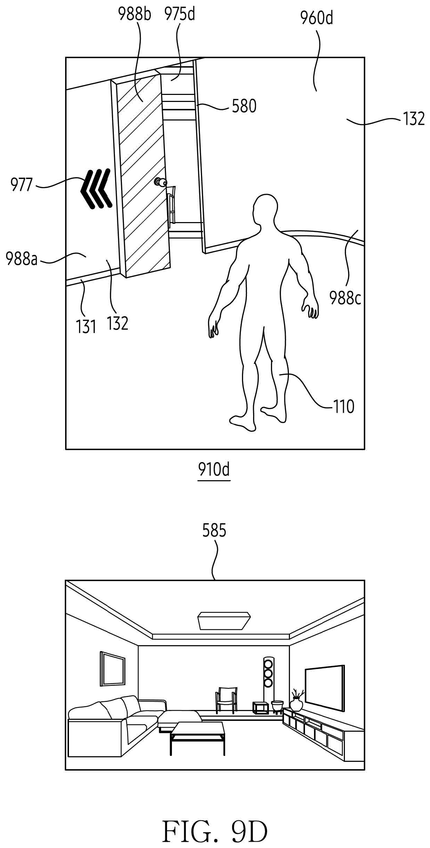

Referring to FIG. 9D, the wearable device 101 may generate the virtual area 580 on the boundary surface 132 of the boundary region 130. The wearable device 101 may display at least a portion 975d of the external image 585 obtained through a camera (e.g., the camera 425) of the wearable device 101 through the virtual area 580. On a fourth screen 910d, the wearable device 101 may display at least a portion 975d of the external image 585 through the virtual area 580 while displaying a pattern image 960d including lines and a virtual environment. The wearable device 101 may display a visual object (e.g., a first portion 988a, a second portion 988b, and a third portion 988c) for a sliding door to provide the user 110 with a more intuitive user experience that is closer to a real environment. For example, on the boundary surface 132, the wearable device 101 may display the first portion 987a and the third portion 987c corresponding to a wall, and the second portion 988b corresponding to the sliding door mounted on the wall. The at least a portion 975d of the external image 585 may be displayed to the user 110 through the second portion 988b and the third portion 988c.

According to an embodiment, the wearable device 101 may receive a first user input for the virtual area 580. The first user input may be used to display a visual object (e.g., a visual object 977) for an area adjustment of the virtual area 580. For example, in the wearable device 101, in a case that gaze information of the user 110 is directed toward the virtual area 580 for a specified time (e.g., N seconds, N is a predetermined natural number), the wearable device 101 may initiate display of the visual object. For another example, in the wearable device 101, in a case that the position of the controller 590 remains in the virtual area 580 for a specified time (e.g., N seconds, N is a predetermined natural number), the wearable device 101 may initiate display of the visual object. For still another example, the wearable device 101 may initiate display of the visual object through a user input using another controller other than the controller 590 used to display the virtual area 580.

According to an embodiment, the wearable device 101 may display the visual object 977 for an area adjustment (e.g., a size adjustment or a position adjustment) of the virtual area 580 in response to the first user input. The wearable device 101 may further display the visual object 977 for guiding a user input of the user 110. For example, the wearable device 101 may display an arrow object indicating a direction in which a door of the sliding door opens, as the visual object 977.

According to an embodiment, the wearable device 101 may adjust the size of the virtual area 580 based on a second user input on the visual object. For example, the user 110 may select a visual object (e.g., the visual object 977 or the second portion 988b) through the controller 590, and then move the controller 590 from the selected visual object in a direction away from the virtual area 580. The wearable device 101 may recognize that the intention of the user 110 is to increase the size of the virtual area 580 by obtaining an input for the selection and tracking the movement direction. For example, as the second portion 988b moves further left with respect to the user 110 in response to the second user input, a size of a portion of the external image 585 displayed to the user 110 may increase. In response to the second user input, the size of the virtual area 580 may be changed from a first size to a second size. The second size may be larger than the first size.

In FIG. 9D, a user input of increasing the size of the virtual area 580 by pushing the sliding door has been described as an example, but embodiments of the present disclosure are not limited thereto. The wearable device 101 may obtain a gesture of pulling a sliding door (e.g., the second portion 988b) through an input means (e.g., the controller 590 or a part (e.g., a hand) of a body). The wearable device 101 may display the virtual area 580 having a reduced size in response to the gesture.

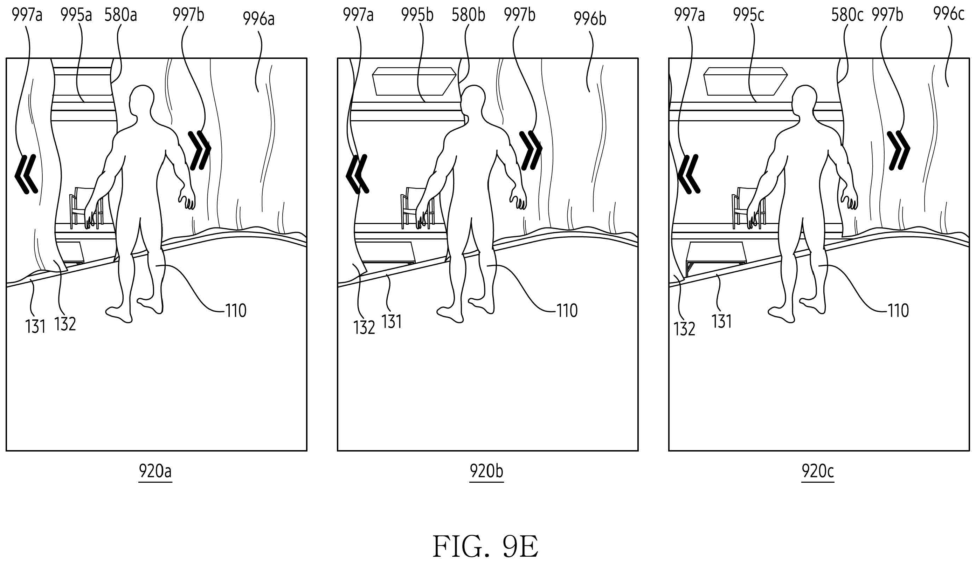

Referring to FIG. 9E, the wearable device 101 may generate a virtual area 580a on the boundary surface 132 of the boundary region 130. The wearable device 101 may display at least a portion 995a of the external image 585 obtained through a camera (e.g., the camera 425) of the wearable device 101 through the virtual area 580a. On a first screen 920a, the wearable device 101 may display a visual pattern 996a for representing the boundary surface 132. In order to provide the user 110 with a more intuitive user experience that is closer to a real environment, the visual pattern 996a may include a curtain-shaped image. While displaying the visual pattern 996a, the wearable device 101 may display at least a portion 995a of the external image 585 through the virtual area 580a.

According to an embodiment, the wearable device 101 may display visual objects (e.g., a first visual object 997a and a second visual object 997b) for an area adjustment (e.g., a size adjustment or a position adjustment) of the virtual area 580a. The visual objects may be used to guide a user input of the user 110. For example, the visual objects may include an arrow object indicating a gesture of pulling a curtain.

According to an embodiment, the wearable device 101 may adjust the size of the virtual area 580a based on a second user input on the visual object. For example, the user 110 may select a visual object (e.g., the first visual object 997a or the second visual object 997b) through the controller 590, and then move the controller 590 from the selected visual object in a direction away from the virtual area 580a. The wearable device 101 may recognize that the intention of the user 110 is to increase the size of the virtual area 580a by obtaining an input for the selection and tracking the movement direction. The size of the virtual area 580a may be expanded.

In response to the second user input, the wearable device 101 may display a second screen 920b. On the second screen 920b, the wearable device 101 may generate a virtual area 580b on the boundary surface 132 of the boundary region 130. The wearable device 101 may display at least a portion 995b of the external image 585 obtained through a camera (e.g., the camera 425) of the wearable device 101 through the virtual area 580b. On the second screen 920b, the wearable device 101 may display a visual pattern 996b for representing the boundary surface 132. As in the first screen 920a, the visual pattern 996b may include a curtain-shaped image. While displaying the visual pattern 996b, the wearable device 101 may display the at least a portion 995b of the external image 585 through the virtual area 580b. A size of the virtual area 580b may be larger than the size of the virtual area 580a.

According to an embodiment, the wearable device 101 may adjust the size of the virtual area 580b. For example, the user 110 may select a visual object (e.g., the first visual object 997a or the second visual object 997b) through the controller 590, and then move the controller 590 from the selected visual object in a direction away from the virtual area 580b. The wearable device 101 may recognize that the intention of the user 110 is to increase the size of the virtual area 580b by obtaining an input for the selection and tracking the movement direction. The size of the virtual area 580b may be expanded.

The wearable device 101 may display a third screen 920c. On the third screen 920c, the wearable device 101 may generate a virtual area 580c on the boundary surface 132 of the boundary region 130. The wearable device 101 may display at least a portion 995c of the external image 585 obtained through a camera (e.g., the camera 425) of the wearable device 101 through the virtual area 580c. On the third screen 920c, the wearable device 101 may display a visual pattern 996b for representing the boundary surface 132. As in the first screen 920a and the second screen 920b, the visual pattern 996c may include a curtain-shaped image. While displaying the visual pattern 996c, the wearable device 101 may display at least a portion 995c of the external image 585 through the virtual area 580c. The size of the virtual area 580b may be larger than a size of the virtual area 580c.

In order to provide the user 110 with a feeling of continuous expansion, in response to one gesture, the wearable device 101 may sequentially display virtual areas having various sizes. The wearable device 101 may gradually increase a size of a virtual area. For example, the wearable device 101 may be connected to two controllers (e.g., a first controller for a left hand and a second controller for a right hand). The wearable device 101 may select the first visual object 997a through the first controller and select the second visual object 997a through the second controller. After the selection, the user 110 may move the first controller in a left direction and the second controller in a right direction. The wearable device 101 may sequentially adjust the size of the virtual area based on the movement of the first controller and the second controller. The size may gradually increase in an order of the virtual area 580a, the virtual area 580b, and the virtual area 580c. Based on the increasing size of the virtual area, the size of the visual pattern representing the boundary surface 132 may decrease. The wearable device 101 may reduce the size of the visual pattern such that a shape in which a curtain is drawn aside is viewable by the user 110. The wearable device 101 may display in an order of the visual pattern 996a, the visual pattern 996b, and the visual pattern 996c.

In FIGS. 9A and 9E, an example of adjusting the size of the virtual area 580 has been described, but embodiments of the present disclosure are not limited thereto. According to an embodiment, the wearable device 101 may change the position of the virtual area 580. For example, the wearable device 101 may move the position of the virtual area 580 through a user input to visual objects positioned around the virtual area 580. As an example, the position of the virtual area 580 may be changed through a gesture of moving the first visual object 971b and the second visual object 972b exemplified in FIG. 9B in the same direction (e.g., right).

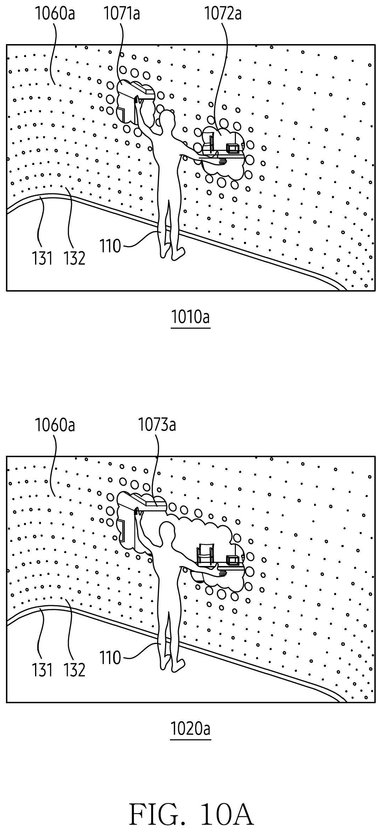

FIGS. 10A to 10B illustrate examples of an interaction between a boundary region (e.g., a boundary region 130) and a user (e.g., a user 110) using a plurality of virtual areas. A wearable device 101 may be connected to a plurality of controllers (e.g., a first controller and a second controller). The same reference number may represent the same description in different drawings.

Referring to FIG. 10A, a first screen 1010a illustrates an example in which a plurality of virtual areas are displayed. A wearable device 101 may display a virtual environment. While the virtual environment is displayed, the wearable device 101 may display a pattern image 1060a (e.g., a grid in which circles are repeatedly disposed). The wearable device 101 may display a boundary line 131 of a boundary region 130 and display the pattern image 1060a on a boundary surface 132. While displaying the virtual environment and the pattern image 1060a, the wearable device 101 may display a first virtual area 1071a and a second virtual area 1072a. The first virtual area 1071a may be generated by a first controller connected to the wearable device 101 positioned within a second threshold distance from the boundary region 130. The second virtual area 1072a may be generated by a second controller connected to the wearable device 101 positioned within the second threshold distance from the boundary region 130. A position of the second virtual area 1072a may be different from a position of the first virtual area 1071a. While the virtual environment and the pattern image 1060a are displayed, the wearable device 101 may display at least a portion of an external image 585 through the first virtual area 1071a and at least another portion of the external image 585 through the second virtual area 1072a.

A second screen 1020a illustrates an example in which an extended virtual area 1073a including a plurality of virtual areas is displayed. According to an embodiment, the wearable device 101 may determine whether to display the extended virtual area 1073a based on a distance between the virtual areas. For example, the wearable device 101 may obtain information for the position of the first virtual area 1071a. The wearable device 101 may obtain information for the position of the second virtual area 1072a. The wearable device 101 may determine a distance between the position of the first virtual area 1071a and the position of the second virtual area 1072a. The wearable device 101 may determine whether the distance is equal to or less than a threshold distance. In a case that the distance is equal to or greater than the threshold distance, the wearable device 101 may maintain display of the first virtual area 1071a and the second virtual area 1072a. In a case that the distance is less than the threshold distance, the wearable device 101 may display the extended virtual area 1073a. The extended virtual area 1073a may include a first virtual area 1071a and a second virtual area 1072a. As a non-limiting example, in a case that the distance is less than the threshold distance, the wearable device 101 may generate the extended virtual area 1073a after a certain time (e.g., N seconds, N is a natural number) has elapsed from a time point at which at least a portion of an external image is displayed through the first virtual area 1071a and the second virtual area 1072a. While the virtual environment and the pattern image 1060a are displayed, the wearable device 101 may display at least a portion of the external image 585 through the extended virtual area 1073a.

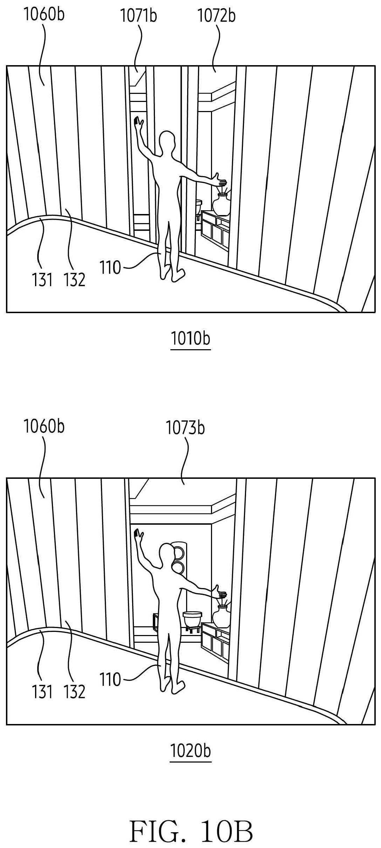

Referring to FIG. 10B, a first screen 1010b illustrates an example in which a plurality of virtual areas are displayed. A wearable device 101 may display a virtual environment. While the virtual environment is displayed, the wearable device 101 may display a pattern image 1060b (e.g., a motif in which lines are repeatedly disposed). The wearable device 101 may display a boundary line 131 of a boundary region 130 and display the pattern image 1060b on a boundary surface 132. While displaying the virtual environment and the pattern image 1060b, the wearable device 101 may display a first virtual area 1071b and a second virtual area 1072b. The first virtual area 1071b may be generated by a first controller connected to the wearable device 101 positioned within a second threshold distance from the boundary region 130. The second virtual area 1072b may be generated by a second controller connected to the wearable device 101 positioned within the second threshold distance from the boundary region 130. A position of the second virtual area 1072b may be different from a position of the first virtual area 1071b. While the virtual environment and the pattern image 1060b are displayed, the wearable device 101 may display at least a portion of the external image 585 through the first virtual area 1071b and at least another portion of the external image 585 through the second virtual area 1072b.

A second screen 1020b illustrates an example in which an extended virtual area 1073b including a plurality of virtual areas is displayed. According to an embodiment, the wearable device 101 may determine whether to display the extended virtual area 1073b based on a distance between the virtual areas. For example, the wearable device 101 may obtain information for the position of the first virtual area 1071b. The wearable device 101 may obtain information for the position of the second virtual area 1072b. The wearable device 101 may determine a distance between the position of the first virtual area 1071b and the position of the second virtual area 1072b. The wearable device 101 may determine whether the distance is equal to or less than a threshold distance. In a case that the distance is equal to or greater than the threshold distance, the wearable device 101 may maintain display of the first virtual area 1071b and the second virtual area 1072b. In a case that the distance is less than the threshold distance, the wearable device 101 may display the extended virtual area 1073b. The extended virtual area 1073b may include the first virtual area 1071b and the second virtual area 1072b. As a non-limiting example, in a case that the distance is less than the threshold distance, the wearable device 101 may generate the extended virtual area 1073b after a certain time (e.g., N seconds, N is a natural number) has elapsed from a time point at which at least a portion of an external image is displayed through the first virtual area 1071b and the second virtual area 1072b. While the virtual environment and the pattern image 1060b are displayed, the wearable device 101 may display at least a portion of the external image 585 through the extended virtual area 1073b. As if the user 110 draws aside a curtain with both hands, the wearable device 101 may form the extended virtual area 1073b through the first controller and the second controller. The wearable device 101 may display at least a portion of the external image 585 through the extended virtual area 1073b.

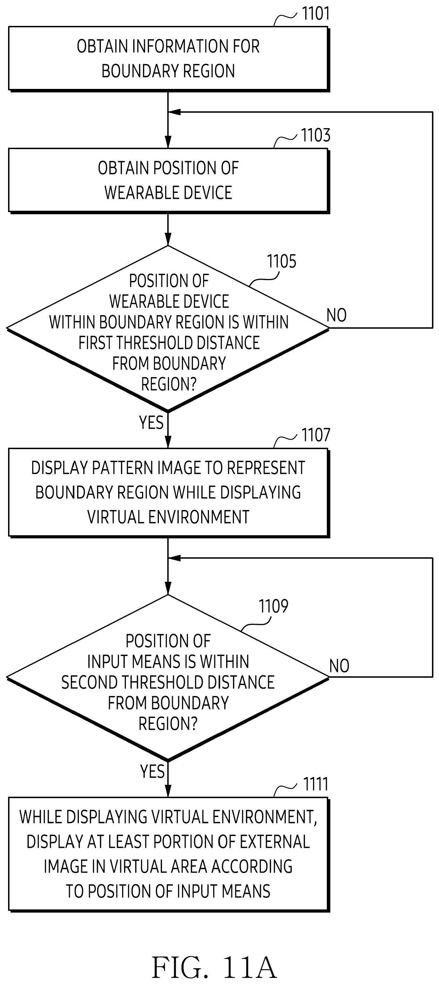

FIG. 11A illustrates an operation flow of a wearable device (e.g., a wearable device 101) for an interaction with a boundary region (e.g., a boundary region 130) within the boundary region

Referring to FIG. 11A, in operation 1101, the wearable device 101 (e.g., a processor 410) may obtain information for the boundary region 130. The boundary region 130 may be defined to guide a boundary at which a virtual environment is displayed to a user 110 of the wearable device 101. The wearable device 101 may set the boundary region 130 based on a user input and/or a specified setting.

In operation 1103, the wearable device 101 may obtain a position of the wearable device 101. The wearable device 101 may obtain the position of the wearable device 101 with respect to the boundary region 130 based on sensor data obtained from at least one sensor (e.g., a sensor 430) of the wearable device 101.

In operation 1105, the wearable device 101 may determine whether the position of the wearable device 101 within the boundary region 130 is within a first threshold distance from the boundary region 130. The wearable device 101 may be positioned within the boundary region. The wearable device 101 may determine whether the position of the wearable device 101 is within the first threshold distance from the boundary region 130. In a case that the position of the wearable device 101 is within the first threshold distance from the boundary region 130, the wearable device 101 may perform operation 1107. In a case that the position of the wearable device 101 is not within the first threshold distance from the boundary region 130 (i.e., outside the first threshold distance), the wearable device 101 may perform the operation 1103 again. The wearable device 101 may continue to display the virtual environment.

In operation 1107, the wearable device 101 may display a pattern image to represent the boundary region 130 while displaying the virtual environment. In order to notify the user 110 that it is adjacent to the boundary region, the wearable device 101 may display the pattern image on a boundary surface 132 of the boundary region 130. The pattern image may include a visual pattern for representing an area occupied by the boundary surface 132. For example, the pattern image may include a specified motif (e.g., a stripe). An interval between lines in the stripe may be determined according to the position of the wearable device 101. As the position of the wearable device 101 is closer to the boundary region 130, the interval between the lines may be shorter. In other words, as the position of the wearable device 101 is closer to the boundary region 130, the lines may be more densely displayed on the boundary surface 132. For example, the pattern image may include a grid in which a specified shape is repeated. A density of the specified shape on the grid may be determined according to the position of the wearable device 101. As the position of the wearable device 101 is closer to the boundary region 130, the repeated shape on the grid may be more densely disposed. As an example, as the position of the wearable device 101 is closer to the boundary region 130, a size of the repeated shape may be larger.

In operation 1109, the wearable device 101 may determine whether a position of an input means (e.g., a controller 590 or at least a part (e.g., a hand) of a body of the user 110) is within a second threshold distance from the boundary region 130. For example, the input means may include the controller 590. As an example, the controller 590 may be equipment that may be gripped by the hand of the user 110, or may be equipment (e.g., a ring, a bracelet, a glove, an armband, or a wristband) wearable on at least a part of the body of the user 110. The wearable device 101 may obtain information for a position of the controller 590. Based on the information for the position of the controller 590, the wearable device 101 may determine whether the controller 590 is positioned within the second threshold distance from the boundary surface 132 of the boundary region 130. The controller 590 positioned within the second threshold distance from the boundary surface 132 may indicate an intention of the user 110 to interact with a real environment beyond the boundary region 130. For another example, the input means may include at least a part (e.g., hand) of the body of the user 110 of the wearable device 101. The wearable device 101 may obtain an image through a camera (e.g., a camera 425) and determine whether a specified object is included in the image. The specified object may correspond to a part of the body of the user 110. As an example, the wearable device 101 may detect an object corresponding to the hand of the user 110. In the wearable device 101, based on information for a part (e.g., a hand) of the body of the user 110, the wearable device 101 may determine whether the part is positioned within the second threshold distance from the boundary surface 132 of the boundary region 130. A part of the body of the user 110 positioned within the second threshold distance from the boundary surface 132 may indicate an intention of the user 110 to interact with a real environment beyond the boundary region 130.

In a case that the position of the input means is within the second threshold distance from the boundary region 130, the wearable device 101 may perform operation 1111. In a case that the position of the input means is not within the second threshold distance from the boundary region 130 (in a case that it is outside the second threshold distance), the wearable device 101 may perform the operation 1109 again.

In operation 1111, while displaying the virtual environment, the wearable device 101 may display at least a portion of an external image (e.g., the external image 585) in a virtual area (e.g., a virtual area 580) according to the position of the input means (e.g., the controller 590 or at least a part (e.g., a hand) of the body of the user 110). For example, through a movement of the controller 590, the wearable device 101 may determine that the intention of the user 110 is an interaction with a real environment beyond the boundary region 130. For example, the wearable device 101 may determine that the intention of the user 110 is an interaction with a real environment beyond the boundary region 130 by checking that a part of the body of the user 110 is photographed on the external image captured through the camera 425. The wearable device 101 may obtain the external image 585 corresponding to a real environment through a camera (e.g., the camera 425). The wearable device 101 may determine the virtual area 580 corresponding to the position of the input means. The position of the input means may indicate an area of a real environment that the user 110 desires to view. While displaying the virtual environment and the pattern image, the wearable device 101 may display at least a portion of the external image 585 through the virtual area 580.

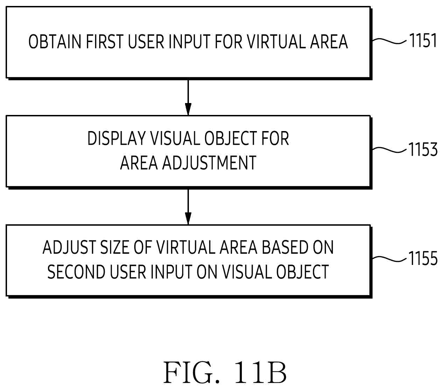

FIG. 11B illustrates an operation flow of a wearable device (e.g., the wearable device 101) for an area adjustment of a virtual area within a boundary region (e.g., the boundary region 130). As a position of the controller 590 and/or a position of the wearable device 101 are within a second threshold distance from the boundary region 130, the wearable device 101 may display a virtual area (e.g., the virtual area 580). In FIG. 11B, a situation in which at least a portion of the external image 585 is displayed through the virtual area 580 together with a virtual image of a virtual environment by the wearable device 101 positioned inside the boundary region 130 is described.

Referring to FIG. 11B, in operation 1151, the wearable device 101 (e.g., the processor 410) may obtain a first user input for the virtual area 580. The first user input may be used to display a visual object (e.g., the first visual object 971a, the second visual object 972a, the third visual object 973a, or the fourth visual object 974a of FIG. 9A, or the first visual object 971b or the second visual object 972b of FIG. 9B) for an area adjustment of the virtual area 580. For example, in the wearable device 101, in a case that gaze information of the user 110 is directed toward the virtual area 580 for a specified time (e.g., N seconds, N is a predetermined natural number), the wearable device 101 may initiate display of the visual object. In other words, in a case that a gaze input of the user 110 is maintained for the specified time, the wearable device 101 may initiate display of the visual object. For another example, in the wearable device 101, in a case that the position of the controller 590 remains in the virtual area 580 for a specified time (e.g., N seconds, N is a predetermined natural number), the wearable device 101 may initiate display of the visual object. For still another example, the wearable device 101 may initiate display of the visual object through a user input using another controller other than the controller 590 used to display the virtual area 580.

In operation 1153, the wearable device 101 may display a visual object (e.g., the first visual object 971a, the second visual object 972a, the third visual object 973a, or the fourth visual object 974a of FIG. 9A, or the first visual object 971b or the second visual object 972b of FIG. 9B) for an area adjustment. The wearable device 101 may display the visual object in response to the first user input. The visual object may be used as a soft handler for an area adjustment of the virtual area 580. The visual object may be disposed adjacently around the virtual area 580. For example, the wearable device 101 may display a plurality of visual objects as a user interface for an area adjustment. The plurality of visual objects may guide a user input by being displayed adjacent to the virtual area 580.

In operation 1155, the wearable device 101 may adjust a size of a virtual area based on a second user input on the visual object. The wearable device 101 may obtain the second user input on the visual object. According to an embodiment, the wearable device 101 may obtain the second user input on the visual object based on a movement of the controller 590. For example, the wearable device 101 may select the plurality of visual objects through the controller 590 and expand a size of the virtual area 580 through a gesture of pulling the plurality of selected visual objects outward from the center. For another example, the wearable device 101 may expand a size of the virtual area 580 by moving one visual object of the plurality of visual objects in a direction away from the virtual area 580 through the controller 590.

Although not illustrated in FIG. 11B, as the size of the virtual area 580 is adjusted, an additional effect may be provided to the user 110. For example, as the size of the virtual area 580 expands, a volume of a sound signal for a virtual environment may decrease. In order to increase concentration of the user 110 on an external environment, the wearable device 101 may decrease the volume of the sound signal. As another example, as the size of the virtual area 580 decreases, a volume of a sound signal for a virtual environment may increase. In order to increase awareness of the user 110 with respect to the virtual environment, the wearable device 101 may increase the volume of the sound signal.

The wearable device 101 may not only simply adjust the volume of the sound signal for the virtual environment, but also synthesize and output a sound signal for a real environment with the sound signal for the virtual environment. The wearable device 101 may adaptively set a synthesis ratio (hereinafter, a first sound signal) of a sound signal (hereinafter, a second sound signal) for an actual environment and a sound signal for a virtual environment. For example, in order to notify the user 110 that it becomes closer to a real environment, the wearable device 101 may increase a weight to be applied to the second sound signal and decrease a weight to be applied to the first sound signal. For another example, in order to notify the user 110 that it moves away from a real environment, the wearable device 101 may decrease a weight to be applied to the second sound signal and increase a weight to be applied to the first sound signal.

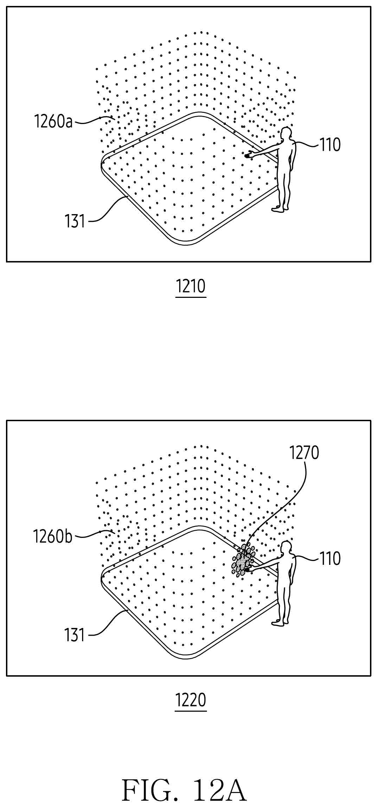

FIGS. 12A to 12B illustrate examples of an interaction between a boundary region (e.g., the boundary region 130) and a user (e.g., the user 110) outside the boundary region. The same reference number may represent the same description in different drawings.

Referring to FIG. 12A, a first screen 1210 illustrates a situation in which the user 110 outside the boundary region 130 is positioned within a first threshold distance from the boundary region 130. As a wearable device 101 is positioned within the first threshold distance, the wearable device 101 may display a pattern image 1260 to represent the boundary region 130. The wearable device 101 may provide the user 110 with the boundary region 130 while displaying an external image obtained through a camera (e.g., a camera 425). For example, the wearable device 101 may display a boundary line 131 while displaying the external image, and display the pattern image 1260 on an external boundary surface (i.e., an opposite surface of a boundary surface 132).

A second screen 1220 illustrates a situation in which the user 110 outside the boundary region 130 is positioned within the first threshold distance from the boundary region 130. The user 110 of the wearable device 101 may move a head of the user 110 or move a controller (e.g., a controller 590) closer to the boundary region 130 through a part (e.g., a hand) of a body of the user 110. For example, a position of the controller 590 may be within a second threshold distance from the boundary region 130. As the controller 590 becomes closer to the boundary region 130, the wearable device 101 may generate a virtual area 1270. The virtual area 1270 may be generated in an area corresponding to a direction in which the controller 590 faces on the external boundary surface (e.g., the opposite surface of the boundary surface 132). The wearable device 101 may display at least a portion of an image inside the boundary region 130 through the virtual area 1270. The inside of the boundary region 130 may be a space for a virtual environment. The wearable device 101 may display at least a portion of a virtual image of a virtual environment through the virtual area 1270. While displaying the external image and the pattern image 1260, the wearable device 101 may display at least a portion of the virtual image of the virtual environment through the virtual area 1270.

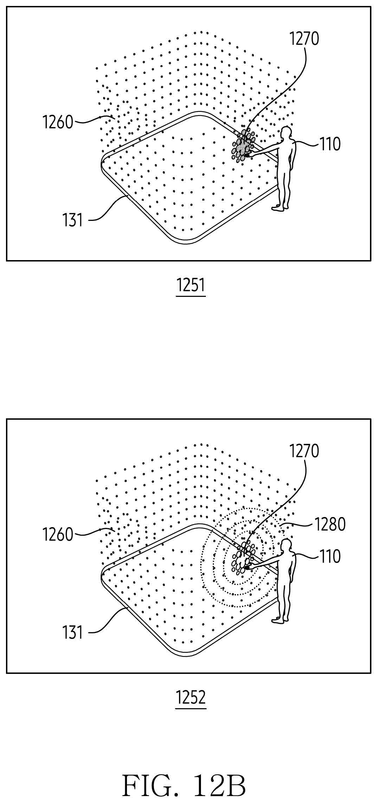

Referring to FIG. 12B, a first screen 1251 illustrates a situation in which the user 110 outside the boundary region 130 is positioned within a threshold distance from the boundary region 130. For example, the user 110 of the wearable device 101 may move a head of the user 110 or move a controller (e.g., the controller 590) closer to the boundary region 130 through a part (e.g., a hand) of a body of the user 110. For example, a position of the controller 590 may be within a second threshold distance from the boundary region 130. The wearable device 101 may display at least a portion of an image inside the boundary region 130 through the virtual area 1270. The wearable device 101 may display at least a portion of a virtual image of a virtual environment through the virtual area 1270. According to an embodiment, an application providing the virtual environment may not provide sound for the virtual environment. The wearable device 101 may provide the user 110 with information for the virtual environment only through the virtual area 1270.

A second screen 1252 illustrates a situation in which the user 110 outside the boundary region 130 is positioned within a threshold distance from the boundary region 130. The wearable device 101 may display at least a portion of a virtual image of a virtual environment through the virtual area 1270. Unlike the first screen 1251, the application providing the virtual environment may provide sound for the virtual environment. According to an embodiment, the wearable device 101 may not only display at least a portion of the virtual image of the virtual environment through the virtual area 1270, but also output a sound signal 1280 for the virtual environment. In order to generate an effect of the sound signal 1280 flowing through the virtual area 1270, the wearable device 101 may control a volume of the sound signal 1280. For example, the wearable device 101 may determine the volume of the sound signal 1280 based on a distance between the boundary region 130 and the wearable device 101. As the distance between the boundary region 130 and the wearable device 101 is shorter, the volume of the sound signal 1280 may be determined to be larger. For example, the wearable device 101 may determine the volume of the sound signal 1280 based on a size of the virtual area 1270. As the size of the virtual area 1270 increases, the volume of the sound signal 1280 may be determined to be larger. A sound signal according to a first volume may be outputted from the virtual area 1270 of a first size, and a sound signal according to a second volume larger than the first volume may be outputted from the virtual area 1270 of a second size larger than the first size.

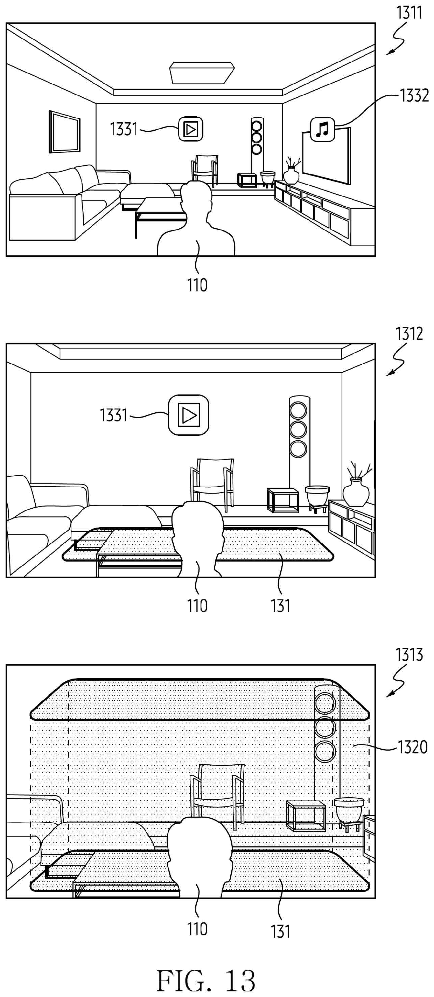

FIG. 13 illustrates an example of displaying a boundary region (e.g., the boundary region 130) according to an application outside the boundary region 130. The same reference number may represent the same description in different drawings.

In FIG. 13, a first screen 1311 illustrates a situation in which a user 110 of a wearable device 101 is positioned outside a first threshold distance from a boundary region 130. The wearable device 101 may obtain an external image through a camera (e.g., a camera 425) of the wearable device 101. The wearable device 101 may display an external image. While displaying the external image, the wearable device 101 may display an icon (e.g., a first icon 1331 or a second icon 1332) for at least one application (e.g., a video application and/or a music application). For example, the wearable device 101 may keep running, in a background, an application (e.g., a video application) that was running for a virtual environment within the boundary region 130, outside the boundary region 130. Since the wearable device 101 does not need to display the virtual environment of the application outside the boundary region 130, the wearable device 101 may display an icon (e.g., a first icon 1331) corresponding to the application together with the external image. As a non-limiting example, a state of the application corresponding to the icon may be indicated through an edge of the icon. As an example, in a case that the edge of the icon is green, it may indicate that the application is running in the background. As an example, in a case that the edge of the icon is red, it may indicate that the application is not running in the background.

A second screen 1312 illustrates a situation in which the user 110 of the wearable device 101 is closer to the boundary region 130 than the position on the first screen 1311. The wearable device 101 may display an external image. While displaying the external image, the wearable device 101 may display an icon (e.g., the first icon 1331) for an application (e.g., a video application) positioned in a field of view of the user 110. The wearable device 101 may display at least a portion of the boundary region 130 for a virtual environment provided through the application. For example, the wearable device 101 may display a boundary line 131 of the boundary region 130. While displaying the external image, the wearable device 101 may display the boundary line 131. In order to gradually represent the boundary region 130 to the user 110, the wearable device 101 may preferentially display the boundary line 131 among the boundary region 130.

A third screen 1313 illustrates a situation in which the user 110 of the wearable device 101 is closer to the boundary region 130 than the position on the second screen 1312. For example, the wearable device 101 may be positioned within the first threshold distance from the boundary region 130. The wearable device 101 may display a bottom of the boundary region 130 through the boundary line 131. In addition, an external boundary surface 1320 of the boundary region 130 may be displayed. As a non-limiting example, the wearable device 101 may represent the boundary region 130 together with an external image by displaying the boundary region 130 to have an opacity of a certain size. As another example, as described through FIGS. 12A and 12B, the wearable device 101 may also display a pattern image on the external boundary surface 1320.

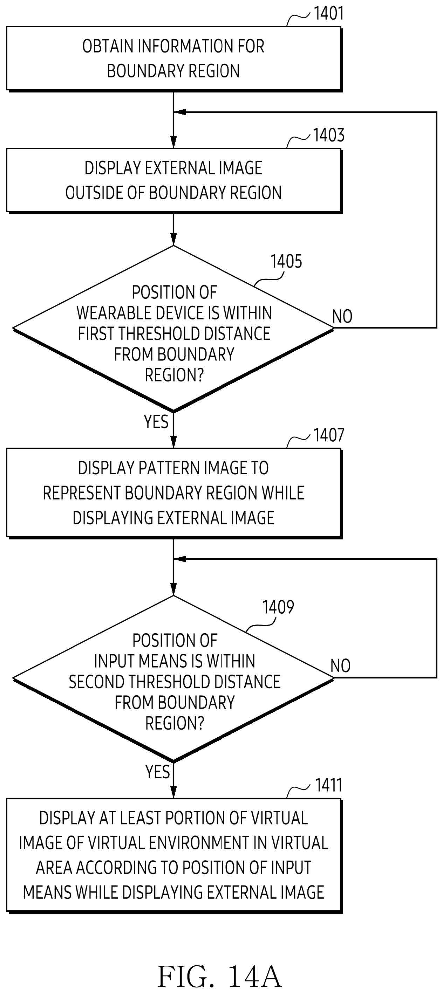

FIG. 14A illustrates an operation flow of a wearable device (e.g., a wearable device 101) for an interaction with a boundary region outside the boundary region.

Referring to FIG. 14A, in operation 1401, the wearable device 101 (e.g., a processor 410) may obtain information for the boundary region. A boundary region 130 may be defined to guide a boundary at which a virtual environment is displayed to a user 110 of the wearable device 101. The wearable device 101 may set the boundary region 130 based on a user input and/or a specified setting.

In operation 1403, the wearable device 101 may display an external image outside of the boundary region 130. The wearable device 101 may obtain a position of the wearable device 101 with respect to the boundary region 130 based on sensor data obtained from at least one sensor (e.g., a sensor 430) of the wearable device 101. The wearable device 101 may be positioned outside the boundary region 130. Accordingly, since the wearable device 101 is outside the boundary region 130, an external image corresponding to a real environment instead of the virtual environment may be obtained through a camera (e.g., a camera 425). The wearable device 101 may display the obtained external image.

In operation 1405, the wearable device 101 may determine whether the position of the wearable device is within a first threshold distance from the boundary region. The wearable device 101 may obtain the position of the wearable device 101 with respect to the boundary region 130 based on sensor data obtained from at least one sensor (e.g., the sensor 430) of the wearable device 101. In a case that the position of the wearable device 101 is within the first threshold distance from the boundary region 130, the wearable device 101 may perform operation 1407. In a case that the position of the wearable device 101 is not within the first threshold distance from the boundary region 130 (i.e., in a case that it is outside the first threshold distance), the wearable device 101 may perform the operation 1403 again.

In operation 1407, the wearable device 101 may display a pattern image to represent the boundary region while displaying the external image. The wearable device 101 may display a pattern image to represent the boundary region 130 while displaying the virtual environment. In order to notify the user 110 that it is adjacent to the boundary region, the wearable device 101 may display the pattern image on an external boundary surface of the boundary region 130. The pattern image may include a visual pattern for representing an area occupied by the external boundary surface. For example, the pattern image may include a specified motif (e.g., a stripe). An interval between lines in the stripe may be determined according to the position of the wearable device 101. As the position of the wearable device 101 is closer to the boundary region 130, the interval between the lines may be shorter. In other words, as the position of the wearable device 101 is closer to the boundary region 130, the lines may be more densely displayed on the external boundary surface. For example, the pattern image may include a grid in which a specified shape is repeated. A density of the specified shape on the grid may be determined according to the position of the wearable device 101. As the position of the wearable device 101 is closer to the boundary region 130, the repeated shape on the grid may be more densely disposed. As an example, as the position of the wearable device 101 is closer to the boundary region 130, a size of the repeated shape may be larger.

In operation 1409, the wearable device 101 may determine whether a position of an input means (e.g., a controller 590 or at least a part (e.g., a hand) of a body of the user 110) is within a second threshold distance from the boundary region. For example, the input means may include the controller 590. The wearable device 101 may obtain information for a position of the controller 590. Based on the information for the position of the controller 590, the wearable device 101 may determine whether the controller 590 is positioned within the second threshold distance from the boundary surface 132 of the boundary region 130. The controller 590 positioned within the second threshold distance from the external boundary surface of the boundary region 130 may indicate an intention of the user 110 to interact with the virtual environment beyond the boundary region 130. For another example, the input means may include at least a part (e.g., a hand) of the body of the user 110 of the wearable device 101. The wearable device 101 may obtain an image through a camera (e.g., the camera 425) and determine whether a specified object is included in the image. The specified object may correspond to a part of the body of the user 110. As an example, the wearable device 101 may detect an object corresponding to the hand of the user 110. In the wearable device 101, based on information for a part (e.g., a hand) of the body of the user 110, the wearable device 101 may determine whether the part is positioned within the second threshold distance from the boundary surface 132 of the boundary region 130. A part of the body of the user 110 positioned within the second threshold distance from the boundary surface 132 may indicate an intention of the user 110 to interact with a real environment beyond the boundary region 130.

In a case that the position of the input means is within the second threshold distance from the boundary region 130, the wearable device 101 may perform operation 1411. In a case that the position of the input means is not within the second threshold distance from the boundary region 130 (in a case that it is outside the second threshold distance), the wearable device 101 may perform the operation 1409 again.

In operation 1411, the wearable device 101 may display at least a portion of a virtual image of the virtual environment in a virtual area (e.g., the virtual area 1270) according to the position of the input means while displaying the external image (e.g., the external image 585). Through a movement of the controller 590, the wearable device 101 may determine that the intention of the user 110 is an interaction with the virtual environment beyond the boundary region 130. The wearable device 101 may determine the virtual area 1270 corresponding to the position of the controller 590. While displaying the external image and the pattern image, the wearable device 101 may display at least a portion of the virtual image of the virtual environment through the virtual area 1270.

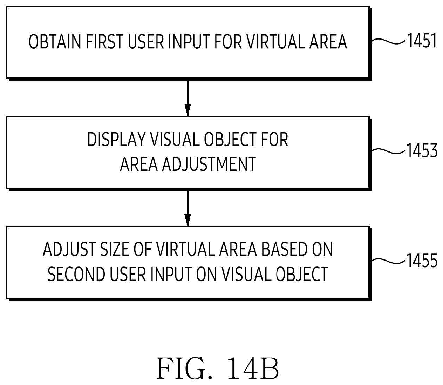

FIG. 14B illustrates an operation flow of a wearable device (e.g., the wearable device 101) for an area adjustment of a virtual area outside the boundary region. As a position of the controller 590 and/or a position of the wearable device 101 are within a second threshold distance from the boundary region 130, the wearable device 101 may display a virtual area (e.g., the virtual area 580). In FIG. 14B, a situation in which at least a portion of a virtual image of the virtual environment is displayed through the virtual area 580 together with the external image 585 corresponding to a real environment by the wearable device 101 positioned outside the boundary region 130 is described.

Referring to FIG. 14B, in operation 1451, the wearable device 101 (e.g., the processor 410) may obtain a first user input for a virtual area. The first user input may be used to display a visual object for an area adjustment of the virtual area 580. For example, in the wearable device 101, in a case that gaze information of the user 110 is directed toward the virtual area 580 for a specified time (e.g., N seconds, N is a predetermined natural number), the wearable device 101 may initiate display of the visual object. For another example, in the wearable device 101, in a case that the position of the controller 590 remains in the virtual area 580 for a specified time (e.g., N seconds, N is a predetermined natural number), the wearable device 101 may initiate display of the visual object. For still another example, the wearable device 101 may initiate display of the visual object through a user input using another controller other than the controller 590 used to display the virtual area 580.

In operation 1453, the wearable device 101 may display a visual object for an area adjustment. In FIGS. 9A and 9B, an example in which visual objects for the area adjustment are displayed inside the boundary region 130 is illustrated, but the visual objects may also be displayed outside the boundary region 130. The wearable device 101 may display a visual object for an area adjustment on a boundary surface outside the boundary region 130. The wearable device 101 may display the visual object in response to the first user input. The visual object may be used as a soft handler for an area adjustment of the virtual area 580. The visual object may be disposed adjacently around the virtual area 580. For example, the wearable device 101 may display a plurality of visual objects as a user interface for an area adjustment. The plurality of visual objects may guide a user input by being displayed adjacent to the virtual area 580.

In operation 1455, the wearable device 101 may adjust a size of a virtual area based on a second user input on the visual object. The wearable device 101 may obtain the second user input on the visual object. According to an embodiment, the wearable device 101 may obtain the second user input on the visual object based on a movement of the controller 590. For example, the wearable device 101 may select the plurality of visual objects through the controller 590 and expand a size of the virtual area 580 through a gesture of pulling the plurality of selected visual objects outward from the center. For another example, the wearable device 101 may expand the size of the virtual area 580 by moving one visual object of the plurality of visual objects in a direction away from the virtual area 580 through the controller 590.

Although not illustrated in FIG. 14B, as the size of the virtual area 580 is adjusted, an additional effect may be provided to the user 110. For example, as the size of the virtual area 580 expands, a volume of a sound signal for a virtual environment may increase. In order to increase awareness of the user 110 with respect to the virtual environment, the wearable device 101 may increase the volume of the sound signal. As another example, as the size of the virtual area 580 decreases, a volume of a sound signal for a virtual environment may decrease. In order to increase awareness of the user 110 with respect to a real environment instead of the virtual environment, the wearable device 101 may decrease the volume of the sound signal.

The wearable device 101 may not only simply adjust the volume of the sound signal for the virtual environment, but also synthesize and output a sound signal for a real environment with the sound signal for the virtual environment. The wearable device 101 may adaptively set a synthesis ratio (hereinafter, a first sound signal) of a sound signal (hereinafter, a second sound signal) for a real environment and a sound signal for a virtual environment. For example, in order to notify the user 110 that it becomes closer to a virtual environment, the wearable device 101 may increase a weight to be applied to the first sound signal and decrease a weight to be applied to the second sound signal. For another example, in order to notify the user 110 that it moves away from a virtual environment, the wearable device 101 may decrease a weight to be applied to the first sound signal and increase a weight to be applied to the second sound signal.

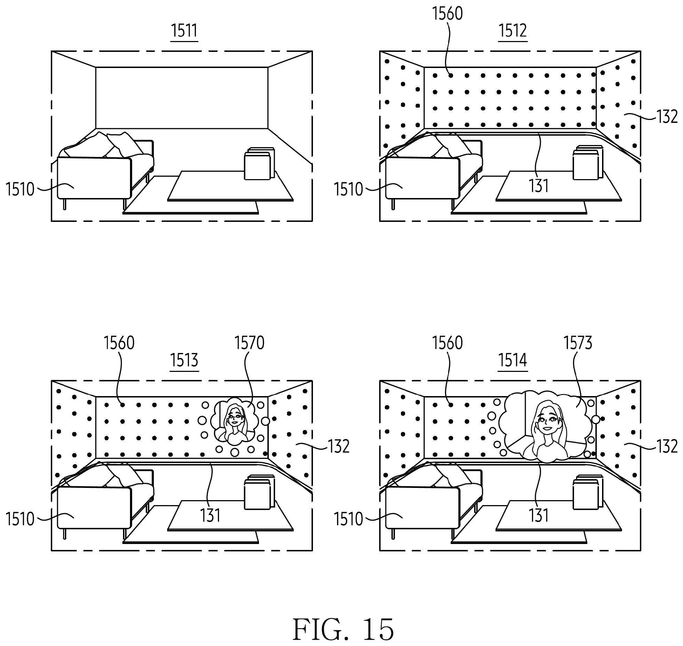

FIG. 15 illustrates an example of a virtual area for an external object entering a boundary region 130. The same reference number may represent the same description in different drawings.

Referring to FIG. 15, on a first screen 1511, a wearable device 101 may display a virtual image 1510 of a virtual environment. An external object may approach the wearable device 101. For example, the external object may enter within a certain distance from a boundary region 130 (e.g., a boundary line 131 or a boundary surface 132) set in the wearable device 101. As the external object enters within the certain distance from the boundary region 130, the wearable device 101 may display a pattern image 1560.

On a second screen 1512, the wearable device 101 may display the pattern image 1560 together with the boundary line 131 while displaying the virtual image 1510. The pattern image 1560 may be displayed on the boundary surface 132 of the boundary region 130. The external object may approach the wearable device 101 closer.

On a third screen 1513, the wearable device 101 may generate a virtual area 1570. According to an embodiment, the wearable device 101 may generate the virtual area 1570 based on a gaze input of a user 110. For example, in a case that the gaze input of the user 110 is directed to a specific position for at least a certain time, the wearable device 101 may generate the virtual area 1570 at the specific position. According to an embodiment, in a case that the external object is detected to be positioned within a second threshold distance from the boundary region 130, the wearable device 101 may generate the virtual area 1570 in an area corresponding to the external object. The wearable device 101 may display at least a portion of an image corresponding to the external object through the virtual area 1570.

On a fourth screen 1514, the wearable device 101 may generate a virtual area 1573. According to an embodiment, the wearable device 101 may enlarge a size of the virtual area 1570. For example, the wearable device 101 may obtain a gaze input that gazes at the virtual area 1570 for at least a specified time (e.g., at least N seconds, N is a natural number). The wearable device 101 may generate the virtual area 1573 by expanding the virtual area 1570 in response to the gaze input. The wearable device 101 may display at least a portion of the image corresponding to the external object through the virtual area 1573. The gaze of the user 110 being directed to a specific external object may be understood that an intention of the user 110 is interested in the specific external object. The wearable device 101 may provide an interaction with an external object outside the boundary region 130 by expanding a size of a virtual area based on the gaze. As another example, the wearable device 101 may obtain a user input for a separate visual object (e.g., a soft handler or a resizing handler) for enlarging the virtual area 1570. The wearable device 101 may generate the virtual area 1573 by expanding the virtual area 1570 in response to the user input.

In FIG. 15, an example of enlarging a size of a virtual area has been described, but embodiments of the present disclosure are not limited thereto. Reduction in the size of the displayed virtual area due to the external object may also be understood as an embodiment of the present disclosure.

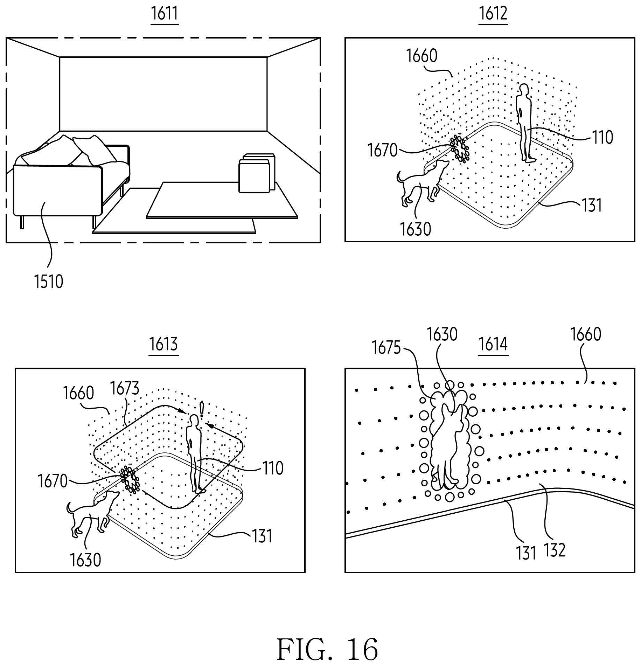

FIG. 16 illustrates an example of a notification of an external object entering a boundary region.

Referring to FIG. 16, on a first screen 1611, a wearable device 101 may display a virtual image 1510 of a virtual environment. While the wearable device 101 displays the virtual image 1510, an external object may approach the wearable device 101. For example, on a second screen 1612, an external object 1630 may enter within a certain distance from a boundary region 130 (e.g., a boundary line 131 or boundary surface 132) set in the wearable device 101. As the external object 1630 enters within the certain distance from the boundary region 130, the wearable device 101 may display a pattern image 1660.

The wearable device 101 may generate a virtual area 1670. According to an embodiment, the wearable device 101 may generate the virtual area 1670 based on identifying that the external object 1630 enters within a certain distance (e.g., a second threshold distance) from the boundary region 130. On the other hand, even if at least a portion of the external image is displayed through the virtual area 1670, the external object 1630 may not be positioned on a field of view screen (e.g., a field of view (FoV)) of a user 110. Accordingly, the wearable device 101 may generate a notification 1673 to notify the user 110 that the external object 1630 is positioned adjacent to the boundary region 130. As on a third screen 1613, the wearable device 101 may indicate to the user 110 that the external object 1630 has entered within a certain distance from the boundary region 130 by displaying the notification 1673 in the virtual environment. For example, the notification 1673 may be displayed in a periphery area of the field of view screen of the user 110.

On the third screen 1613, the visual notification 1673 is illustrated, but embodiments of the present disclosure are not limited thereto. For example, the wearable device 101 may indicate the user 110 that the external object 1630 has entered within a certain distance from the boundary region 130 through a separate sound notification. A fourth screen 1614 illustrates a field of view screen of the user 110 when the user 110 turns their gaze toward a direction from which the external object 1630 has approached. The wearable device 101 may display the screen 1614 corresponding to a rotational movement of the user 110. While displaying the virtual environment and the pattern image 1660, the wearable device 101 may display at least a portion of the external image through a virtual area 1675. The at least a portion of the displayed external image may include the external object 1630.

In FIG. 16, examples of displaying a notification to the user 110 when the external object 1630 enters within a certain distance from the boundary region 130 (e.g., the boundary line 131 or the boundary surface 132) set in the wearable device 101 have been described. However, not only the physical approach of the external object 1630, but also notifying the user 110 of this in a case that sound is detected from the outside may be understood as an embodiment of the present disclosure. For example, the wearable device 101 may detect a specified sound (e.g., a sound of a certain intensity or more, a voice signal corresponding to a specific name, or a voice signal corresponding to a specific command) in an external space through at least one microphone (e.g., a plurality of microphones and/or a directional microphone). In a case that the specified sound is detected, the wearable device 101 may display a notification corresponding to the specified sound in the boundary region 130. The wearable device 101 may determine a position of the boundary surface 132 corresponding to a direction in which the specified sound is detected. In the wearable device 101, the determined position of the boundary surface 132 may be within an FoV of the user 110. The wearable device 101 may provide a specific visual effect (e.g., a wave waveform or a transparent effect) initiating from the position. On the other hand, for another example, in the wearable device 101, the determined position of the boundary surface 132 may be outside the FoV of the user 110. The wearable device 101 may notify the user 110 of an input of the specified sound through a speaker, or display a notification indicating that the specified sound has been detected at a specific point to the user 110 through a display.

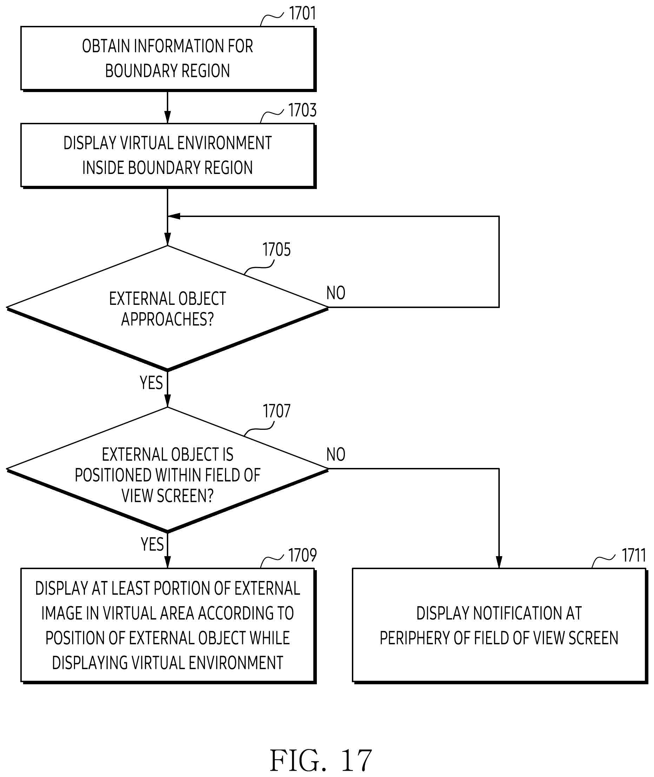

FIG. 17 illustrates an operation flow of a wearable device (e.g., a wearable device 101) for notifying an external object entering a boundary region (e.g., a boundary region 130).

Referring to FIG. 17, in operation 1701, the wearable device 101 (e.g., a processor 410) may obtain information for the boundary region. The boundary region 130 may be defined to guide a boundary at which a virtual environment is displayed to a user 110 of the wearable device 101. The wearable device 101 may set the boundary region 130 based on a user input and/or a specified setting.

In operation 1703, the wearable device 101 may display the virtual environment inside the boundary region 130. The wearable device 101 may be positioned within the boundary region 130. The wearable device 101 may display a virtual image of the virtual environment on a boundary surface 132 of the boundary region 130.

In operation 1705, the wearable device 101 may determine whether an external object approaches. The wearable device 101 may determine whether the external object enters within a certain distance (e.g., a second threshold distance) from the boundary region 130. For example, the wearable device 101 may determine whether the external object enters within the certain distance from the boundary region 130 through a camera (e.g., a camera 425 or a 360-degree camera). For another example, the wearable device 101 may determine whether the external object enters within a certain distance from the boundary region 130 through a microphone. The wearable device 101 may determine whether the external object enters within a certain distance from the boundary region 130 through whether an intensity of a sound signal associated with the external object received through the microphone is equal to or greater than a threshold intensity. As an example, if the intensity of the sound signal associated with the external object is equal to or greater than the threshold intensity, the wearable device 101 may determine that the external object has entered within a certain distance from the boundary region 130. As an example, if the intensity of the sound signal associated with the external object is less than the threshold intensity, the wearable device 101 may determine that the external object has not entered within a certain distance from the boundary region 130. In addition, for example, the wearable device 101 may detect a distance to the external object and a change in the distance through at least one sensor (e.g., a sensor 430, a distance sensor, and/or an ultrasonic sensor), and determine whether the external object enters within the certain distance from the boundary region 130 based on the detection result.

In a case that the external object enters within the certain distance from the boundary region 130, the wearable device 101 may perform operation 1707. In a case that the external object does not enter within the certain distance from the boundary region 130, the wearable device 101 may perform the operation 1705 again.

In the operation 1707, the wearable device 101 may determine whether the external object is positioned within a field of view screen. The field of view screen is a screen viewed by the user 110 of the wearable device 101 and represents an FoV. In a case that the external object is positioned within the field of view screen, the wearable device 101 may perform operation 1709. In a case that the external object is not positioned within the field of view screen, the wearable device 101 may perform operation 1711.

In operation 1709, the wearable device 101 may display at least a portion of an external image in a virtual area according to the position of the external object while displaying the virtual environment. The external image may be obtained through a camera (e.g., the camera 425 or the 360-degree camera) of the wearable device 101. The at least a portion of the external image may include the external object. The wearable device 101 may display an external image including an external object through the virtual area while displaying the virtual environment and a pattern image within the boundary region 130.

In the operation 1711, the wearable device 101 may display a notification at a periphery of the field of view screen. By displaying the notification in the virtual environment, the wearable device 101 may indicate the user 110 that the external object has entered within a certain distance from the boundary region 130.

Although FIG. 17 illustrates that the notification is displayed, embodiments of the present disclosure are not limited thereto. As a non-limiting example, the wearable device 101 may display a guide message notifying that an external object has entered inside the boundary region 130. As a non-limiting example, the wearable device 101 may notify the user 110 that an external object has entered inside the boundary region 130 through vibration of a controller 590 or output of a voice signal.

Although not illustrated in FIG. 17, the wearable device 101 displaying the virtual area may further perform additional operations for adjusting a size of the virtual area. For example, the wearable device 101 may display a visual object (e.g., the first visual object 971a, the second visual object 972a, the third visual object 973a, or the fourth visual object 974a of FIG. 9A, or the first visual object 971b or the second visual object 972b of FIG. 9B) for an area adjustment of the virtual area. The wearable device 101 may receive a user input (e.g., the second user input of FIGS. 9A and 9B, an input of pulling the soft handler outward, or an input of pulling the soft handler inward) to the visual object. The wearable device 101 may adjust the size of the virtual area in response to the user input. For another example, the wearable device 101 may obtain an input of a specified gesture using the controller 590. As an example, in a case that the specified gesture is a gesture of holding both sides and tilting them back, the wearable device 101 may expand the size of the virtual area. As another example, when the specified gesture is a gesture of holding both sides and closing them, the wearable device 101 may reduce the size of the virtual area. For still another example, the wearable device 101 may adjust the size of the virtual area by moving the controller 590 in a gaze direction (e.g., a gaze direction maintained for more than N seconds, N is a natural number) of the user 110.

In embodiments, a wearable device is provided. The wearable device may include a camera, at least one sensor, a display, memory for storing instructions, and a processor. The instructions may cause, when executed by the processor, the wearable device to obtain information for a boundary region to guide a boundary in which a virtual environment is provided, obtain a position of the wearable device with respect to the boundary region based on sensor data obtained from the camera or the at least one sensor, based on identifying that the position of the wearable device within the boundary region is within a first threshold distance from the boundary region, display a pattern image to represent the boundary region through the display while displaying the virtual environment through the display, and based on identifying that a position of an input means connected to the wearable device is within a second threshold distance from the boundary region, display at least a portion of an external image obtained through the camera through the display in a virtual area according to the position of the input means while displaying the virtual environment and the pattern image through the display.

According to an embodiment, the instructions may cause, when executed by the processor, the wearable device to obtain a first user input for the virtual area having a first size, display at least one visual object for adjusting a size of the virtual area in response to the first user input, and display at least a portion of the external image in the virtual area having a size changed from the first size to a second size in response to a second user input for the at least one visual object. The second size of the virtual area may be larger than the first size of the virtual area.

According to an embodiment, the instructions may cause, when executed by the processor, the wearable device to output sound information for the virtual environment according to a first volume while displaying at least a portion of the external image in the virtual area having the first size, and output sound information for the virtual environment according to a second volume while displaying at least a portion of the external image in the virtual area having the second size. The second volume may be smaller than the first volume.

According to an embodiment, the first user input may be obtained based on a gaze input of a user, which is maintained in the virtual area during a specified time. The second user input may be obtained based on a movement of the input means from the at least one visual object in a direction away from the virtual area.

According to an embodiment, the instructions may cause, when executed by the processor, the wearable device to generate the pattern image based on identifying that the position of the wearable device is within the first threshold distance from the boundary region. The pattern image may include a first grid in which a specified shape is repeated in a case that a distance between the wearable device and the boundary region is a first distance. The pattern image may include a second grid in which the specified shape is repeated in a case that the distance between the wearable device and the boundary region is a second distance shorter than the first distance. A density of the specified shape in the second grid may be narrower than a density of the specified shape in the first grid.

According to an embodiment, the instructions may cause, when executed by the processor, the wearable device to display the pattern image including a specified shape of a first size based on identifying that the input means connected to the wearable device is positioned at a first position, and display the pattern image including a specified shape of a second size, based on identifying that the input means connected to the wearable device is positioned at a second position. A distance between the second position and the boundary region may be shorter than a distance between the first position and the boundary region. The second size may be larger than the first size.

According to an embodiment, the pattern image may include shapes of different sizes while at least a portion of the external image is displayed in the virtual area according to the position of the input means, and a size of a first shape among the shapes relatively adjacent to the virtual area may be smaller than a size of a second shape among the shapes relatively distant from the virtual area.

According to an embodiment, the instructions may cause, when executed by the processor, the wearable device to obtain status information of a user based on the sensor data obtained from the at least one sensor, determine a color based on the status information of the user, and display the boundary region and the pattern image through the display according to the determined color.

According to an embodiment, the instructions may cause, when executed by the processor, the wearable device to, based on identifying that a position of a second input means connected to the wearable device is within the second threshold distance from the boundary region, display at least a portion of the external image through the display in a second virtual area according to the position of the second input means while displaying the virtual environment and the pattern image through the display, and based on identifying that a separation distance between the virtual area and the second virtual area is less than a threshold distance, display at least a portion of the external image through the display in a third virtual area including the virtual area and the second virtual area.

According to an embodiment, the instructions may cause, when executed by the processor, the wearable device to, based on identifying that the position of the wearable device is outside the boundary region, display an external image obtained through the camera through the display, and display a pattern image to represent the boundary region through the display while displaying the external image based on identifying that the position of the wearable device outside the boundary region is within the first threshold distance from the boundary region.

According to an embodiment, the instructions may cause, when executed by the processor, the wearable device to, based on identifying that the position of the input means is within the second threshold distance from the boundary region, display a virtual image of the virtual environment through the display in a boundary virtual area according to the position of the input means while displaying the external image and the pattern image through the display.

According to an embodiment, the instructions may cause, when executed by the processor, the wearable device to obtain a first user input for the boundary virtual area having a first size, in response to the first user input, display at least one visual object for adjusting a size of the boundary virtual area, and in response to a second user input for the at least one visual object, display at least a portion of the external image in the boundary virtual area having a size changed from the first size to a second size, and the second size of the boundary virtual area may be larger than the first size of the boundary virtual area.

According to an embodiment, the instructions may cause, when executed by the processor, the wearable device to output sound information for the virtual environment, according to a first volume, while displaying at least a portion of the external image in the boundary virtual area having the first size, and output sound information for the virtual environment, according to a second volume, while displaying at least a portion of the external image in the boundary virtual area having the second size. The second volume may be larger than the first volume.

According to an embodiment, the instructions may cause, when executed by the processor, the wearable device to obtain information for an external object based on at least one of the camera or the at least one sensor, and based on identifying that a position of the external object is within a field of view of the wearable device, display an external image including the external object through the display in a virtual area corresponding to the position of the external object while displaying the virtual environment through the display.

According to an embodiment, the instructions may cause, when executed by the processor, the wearable device to, based on identifying that the position of the external object is outside of the field of view of the wearable device, display a notification for the external object within the field of view through the display while displaying the virtual environment through the display.

According to an embodiment, the instructions may cause, when executed by the processor, the wearable device to, based on identifying that a position of the wearable device is within a second threshold distance from the boundary region, display at least a portion of an external image obtained through the camera through the display in a virtual area according to the position of the wearable device while displaying the virtual environment and the pattern image through the display. The second threshold distance may be smaller than the first threshold distance.

**In** embodiments, a wearable device is provided. The wearable device may include a camera, at least one sensor, a display, memory for storing instructions, and a processor. The instructions may cause, when executed by the processor, the wearable device to, based on scanning of a physical space, obtain information for a boundary region to provide a virtual environment, obtain a position of the wearable device with respect to the boundary region based on sensor data obtained from the camera or the at least one sensor, based on identifying that the position of the wearable device is outside the boundary region, display an external image obtained through the camera through the display, based on identifying that the position of the wearable device outside the boundary region is within a first threshold distance from the boundary region, display a pattern image to represent the boundary region through the display while displaying the external image obtained through the camera, and based on identifying that the position of the wearable device or a position of an input means connected to the wearable device is within a second threshold distance from the boundary region, display a virtual image of the virtual environment through the display in a boundary virtual area according to the position of the wearable device or the position of the input means while displaying the external image and the pattern image through the display.

According to an embodiment, the instructions may cause, when executed by the processor, the wearable device to obtain a first user input for the boundary virtual area having a first size, display at least one visual object for adjusting a size of the boundary virtual area in response to the first user input, and display at least a portion of the external image in the boundary virtual area having a size changed from the first size to a second size in response to a second user input for the at least one visual object. The second size of the boundary virtual area may be larger than the first size of the boundary virtual area.

According to an embodiment, the instructions may cause, when executed by the processor, the wearable device to output sound information for the virtual environment, according to a first volume, while displaying at least a portion of the external image in the boundary virtual area having the first size, and output sound information for the virtual environment, according to a second volume, while displaying at least a portion of the external image in the boundary virtual area having the second size. The second volume may be larger than the first volume.

According to an embodiment, the first user input may be obtained based on a gaze input of a user, which is maintained in the boundary virtual area during a specified time. The second user input may be obtained based on a movement of the input means from the at least one visual object in a direction away from the boundary virtual area.

In the present disclosure, a square pillar is illustrated as an example of a boundary region, but a shape of the boundary region is merely an example for describing embodiments and is not interpreted as limiting the embodiments of the present disclosure. For example, the boundary line 131 of the boundary region 130 may be a circle, and the boundary region 130 may be a cylinder shape. For another example, the boundary line 131 of the boundary region 130 may be a triangle, and the boundary region 130 may have a triangular prism shape.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the wearable device 101). For example, a processor (e.g., the processor 410) of the machine (e.g., the wearable device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device, comprising:
a camera;
at least one sensor;
a display;
memory for storing instructions; and
a processor,
wherein the instructions cause, when executed by the processor, the wearable device to:
obtain information for a boundary region to guide a boundary in which a virtual environment is provided;
obtain a position of the wearable device with respect to the boundary region based on sensor data obtained from the camera or the at least one sensor;
based on identifying that the position of the wearable device within the boundary region is within a first threshold distance from the boundary region, display a pattern image to represent the boundary region through the display while displaying the virtual environment through the display; and
based on identifying that a position of an input means for the wearable device is within a second threshold distance from the boundary region, display at least a portion of an external image obtained through the camera through the display in a virtual area according to the position of the input means while displaying the virtual environment and the pattern image through the display.

2. The wearable device of claim 1, wherein the instructions cause, when executed by the processor, the wearable device to:
obtain a first user input for the virtual area having a first size,
display at least one visual object for adjusting a size of the virtual area in response to the first user input, and
display at least a portion of the external image in the virtual area having a size changed from the first size to a second size in response to a second user input for the at least one visual object, and
wherein the second size of the virtual area is larger than the first size of the virtual area.

3. The wearable device of claim 2, wherein the instructions cause, when executed by the processor, the wearable device to:
output sound information for the virtual environment according to a first volume while displaying at least a portion of the external image in the virtual area having the first size, and
output sound information for the virtual environment according to a second volume while displaying at least a portion of the external image in the virtual area having the second size, and
wherein the second volume is smaller than the first volume.

4. The wearable device of claim 2,
wherein the first user input is obtained based on a gaze input of a user, which is maintained in the virtual area during a specified time, and
wherein the second user input is obtained based on a movement of the input means from the at least one visual object in a direction away from the virtual area.

5. The wearable device of claim 1, wherein the instructions cause, when executed by the processor, the wearable device to generate the pattern image based on identifying that the position of the wearable device is within the first threshold distance from the boundary region,
wherein the pattern image includes a first grid in which a specified shape is repeated in a case that a distance between the wearable device and the boundary region is a first distance,
wherein the pattern image includes a second grid in which the specified shape is repeated in a case that the distance between the wearable device and the boundary region is a second distance shorter than the first distance, and
wherein a density of the specified shape in the second grid is narrower than a density of the specified shape in the first grid.

6. The wearable device of claim 1, wherein the instructions cause, when executed by the processor, the wearable device to:
display the pattern image including a specified shape of a first size based on identifying that the input means for the wearable device is positioned at a first position, and
display the pattern image including a specified shape of a second size, based on identifying that the input means for the wearable device is positioned at a second position,
wherein a distance between the second position and the boundary region is shorter than a distance between the first position and the boundary region, and
wherein the second size is larger than the first size.

7. The wearable device of claim 1,
wherein the pattern image includes shapes of different sizes while at least a portion of the external image is displayed in the virtual area according to the position of the input means, and
wherein a size of a first shape among the shapes relatively adjacent to the virtual area is smaller than a size of a second shape among the shapes relatively distant from the virtual area.

8. The wearable device of claim 1, wherein the instructions cause, when executed by the processor, the wearable device to:
obtain status information of a user based on the sensor data obtained from the camera or the at least one sensor,
determine a color based on the status information of the user, and
display the boundary region and the pattern image through the display according to the determined color.

9. The wearable device of claim 1, wherein the instructions cause, when executed by the processor, the wearable device to:
based on identifying that a position of a second input means for the wearable device is within the second threshold distance from the boundary region, display at least a portion of the external image through the display in a second virtual area according to the position of the second input means while displaying the virtual environment and the pattern image through the display, and
based on identifying that a separation distance between the virtual area and the second virtual area is less than a threshold distance, display at least a portion of the external image through the display in a third virtual area including the virtual area and the second virtual area.

10. The wearable device of claim 1, wherein the instructions cause, when executed by the processor, the wearable device to:
based on identifying that the position of the wearable device is outside the boundary region, display an external image obtained through the camera through the display, and
display a pattern image to represent the boundary region through the display while displaying the external image based on identifying that the position of the wearable device outside the boundary region is within the first threshold distance from the boundary region.

11. The wearable device of claim 10, wherein the instructions cause, when executed by the processor, the wearable device to:
based on identifying that the position of the input means is within the second threshold distance from the boundary region, display a virtual image of the virtual environment through the display in a boundary virtual area according to the position of the input means while displaying the external image and the pattern image through the display.

12. The wearable device of claim 11, wherein the instructions cause, when executed by the processor, the wearable device to:
obtain a first user input for the boundary virtual area having a first size,
in response to the first user input, display at least one visual object for adjusting a size of the boundary virtual area, and
in response to a second user input for the at least one visual object, display at least a portion of the external image in the boundary virtual area having a size changed from the first size to a second size, and
wherein the second size of the boundary virtual area is larger than the first size of the boundary virtual area.

13. The wearable device of claim 12, wherein the instructions cause, when executed by the processor, the wearable device to:
output sound information for the virtual environment, according to a first volume, while displaying at least a portion of the external image in the boundary virtual area having the first size, and
output sound information for the virtual environment, according to a second volume, while displaying at least a portion of the external image in the boundary virtual area having the second size, and
wherein the second volume is larger than the first volume.

14. The wearable device of claim 1, wherein the instructions cause, when executed by the processor, the wearable device to:
obtain information for an external object based on at least one of the camera or the at least one sensor, and
based on identifying that a position of the external object is within a field of view of the wearable device, display an external image including the external object through the display in a virtual area corresponding to the position of the external object while displaying the virtual environment through the display.

15. The wearable device of claim 14, wherein the instructions cause, when executed by the processor, the wearable device to:
based on identifying that the position of the external object is outside of the field of view of the wearable device, display a notification for the external object within the field of view through the display while displaying the virtual environment through the display.
